(19) 

Europäisches
Patentamt
European
Patent Office
Office européen
des brevets

(11) **EP 2 216 094 A2**

(12) **EUROPEAN PATENT APPLICATION**

(43) Date of publication:
**11.08.2010 Bulletin 2010/32**

(21) Application number: **10152802.4**

(22) Date of filing: **05.02.2010**

(51) Int Cl.:
*B01J 20/04* $^{(2006.01)}$    *B01J 20/28* $^{(2006.01)}$
*B01D 53/62* $^{(2006.01)}$    *B01D 53/04* $^{(2006.01)}$
*C01B 3/38* $^{(2006.01)}$

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **05.02.2009 US 150077 P
03.12.2009 US 630388**

(71) Applicant: **AIR PRODUCTS AND CHEMICALS, INC.
Allentown, PA 18195-1501 (US)**

(72) Inventors:
• **Garg, Diwakar
  Emmaus PA 18049 (US)**
• **Wilhelm, Frederick Carl
  Zionsville PA 18092 (US)**

(74) Representative: **Muir, Benjamin M. J.
Beck Greener
Fulwood House
12 Fulwood Place
London WC1V 6HR (GB)**

(54) **CO2-Sorptive Pellets and Uses Thereof**

(57)    $CO_2$ sorptive pellets and/or granules and their use for removing $CO_2$ from $CO_2$-containing gases and for producing hydrogen. $CO_2$ sorptive pellets are suitable for use in fixed bed reactors and the like due to sufficient crush strength. $CO_2$ sorptive granules are suitable for moving, ebullated, expanded and fluidized beds. The $CO_2$ sorptive pellets and/or granules comprise calcium oxide and/or magnesium oxide and at least one binding agent such as calcium titanate, calcium aluminate, calcium zirconate, magnesium titanate, magnesium aluminate, and magnesium zirconate. A method for making the $CO_2$-sorptive pellets is described. The $CO_2$ sorptive pellets optionally comprise at Ni, Pd, Pt, and/or Rh.

EP 2 216 094 A2

## Description

BACKGROUND

Calcium oxide (lime), magnesium oxide, and mixtures of calcium and magnesium oxides (dolomite) are prime candidates for removing and recovering $CO_2$ from hot flue gases. They are also candidates for enhancing reforming of hydrocarbons with steam by removing and recovering $CO_2$ from the process gas stream. Calcium and/or magnesium oxides react with $CO_2$ and form carbonates. The reaction is reversible, and the carbonate can be regenerated to liberate $CO_2$ and again form the respective oxide.

The removal of $CO_2$ from hot flue gases and enhancement of hydrocarbon reforming by removing $CO_2$ involve cyclic operations. For example, in a first step of $CO_2$ removal from hot flue gases, $CO_2$ is sorbed by a hot bed of calcium and/or magnesium oxide, forming a carbonate. The hot bed could be a fixed bed loaded with pelleted sorbent, a fluidized bed loaded with granules, or a moving bed of pellets or granules. As used herein, a "granule" is an agglomerate of numerous particles forming a larger unit. When the bed is substantially saturated with $CO_2$, the spent oxide in carbonate form is regenerated in a second step by passing a purge gas such as nitrogen, air, steam or a mixture thereof through the bed, thereby desorbing or liberating $CO_2$.

Likewise, in a first step of a hydrogen synthesis process, largely pure hydrogen is obtained by the reaction of steam and methane (or other suitable hydrocarbon) over a hot bed of calcium and/or magnesium oxide in conjunction with a reforming catalyst. The hot bed could be a fixed bed loaded with pelleted sorbent, a fluidized bed loaded with granules, or a moving bed of pellets or granules. Calcium and/or magnesium oxide acts as a $CO_2$ sorbent during the reforming reaction, thereby improving the conversion of methane (or other hydrocarbon) and the production of pure hydrogen. The "spent" oxide, substantially saturated with $CO_2$ and in carbonate form is then regenerated by passing a gas such as nitrogen, air, steam or a mixture thereof through the bed, thereby desorbing or liberating $CO_2$.

Calcium and/or magnesium oxides are generally synthesized or available in powder form. Powders are generally not suitable for use in fixed bed or moving bed reactors because of an unacceptable pressure drop through the reactor. Likewise, fine powders are generally not suitable for use in a fluidized bed reactor, since larger particles are needed to promote stable fluidization at practical throughput velocities. It would therefore be desirable to convert this fine powder into granules for use in fluidized bed or moving bed reactors, or pellets or extrudates for use in a fixed or moving bed reactor. Pellets are useful to allow a reasonable pressure drop through the fixed or moving bed reactor. Pellets may also be useful for ebullated, expanded, moving or fluidized bed reactors.

Calcium and/or magnesium oxides are known to undergo a significant volumetric expansion and contraction due to cyclic sorption and desorption of carbon dioxide. Since calcium oxide and magnesium oxide are ceramics, it is difficult for them to undergo volumetric expansion and contraction without cracking and falling apart.

There are several techniques known in the literature for converting powders into pellet form. These techniques involve two distinct steps - preparing green pellets from the powder followed by consolidating the green pellets by calcinating at high temperature. The calcination step is done in a controlled manner where the temperature is increased slowly or in steps. The preparation of the green pellets, the nature of the additives and pore formers mixed with the powder may affect the pellet strength.

Likewise powder can be converted into granules by using a two step technique

- first preparing a slurry by mixing powder with a solvent such as water followed by spray drying or otherwise processing the powder to convert it into green granules. The green granules are then calcined in a controlled manner to provide the desired granules.

Because calcium and/or magnesium oxide pellets or granules undergo significant volumetric expansion and contraction during $CO_2$ sorption/desorption, the pellets or granules prepared by conventional techniques either fall apart within a few $CO_2$ sorption/desorption cycles or do not have the desired $CO_2$ sorption capacity. Because of the volumetric expansion and contraction, suitable calcium and/or magnesium oxide pellets or granules can't be prepared by mixing calcium oxide and/or magnesium oxide with an organic binder, converting the mixture into green pellets or granules, and calcining green pellets or granules at high temperature. These pellets or granules will swell and fell apart within a few cycles of carbon dioxide sorption and desorption.

Suitable calcium oxide and/or magnesium oxide pellets or granules can't be prepared by mixing calcium oxide and/or magnesium oxide powder with gamma or alpha alumina or zirconia powder as a binder and with or without an organic pore former, converting the mixture into green pellets or granules, and calcining green pellets or granules at high temperature. The calcium and/or magnesium present in the oxide form will react with alumina and zirconia and produce calcium and/or magnesium aluminate or zirconate. Such pellets or granules will neither have sufficient $CO_2$ sorption capacity nor retain their shape and size.

Since calcium and/or magnesium oxide reacts with alumina, titania or zirconia, it was thought that strong particulate material or pellets could be prepared with binders that would not react with metal oxide such as calcium and/or magnesium aluminate, calcium and/or magnesium titanate, and calcium and/or magnesium zirconate. Attempts have been made to prepare pellets or granules by mixing calcium oxide powder with calcium titanate or calcium aluminate powder as a binder and an organic pore former, processing the mixture into green pellets or green granules, and calcining green pellets or green granules at high temperature. However, this approach has not been successful in preparing strong and dimensionally stable CaO or MgO pellets or granules.

The use of calcium and/or magnesium oxides has thus been limited in the above mentioned applications despite their high $CO_2$ capacity. There are two reasons. First, pellets or granules formed heretofore do not display stable capacity for $CO_2$ sorption since sorption capacity decreases with only a few cycles. Second and more importantly, pellets or granules formed heretofore have not been dimensionally stable. Both pellets and granules fall apart during cyclic operation and convert into powder.

A journal article by J.C. Abanades titled "The maximum capture efficiency of CO2 using carbonation/ calcination cycle of CaO/CaCO3" Chemical Engineering Journal, vol. 90, p. 303-306 (2002), describes modeling work that showed a significant decrease in $CO_2$ sorption capacity of CaO sorbent with number of sorption and desorption cycles.

Considerable progress has been made towards producing metal oxide powders with stable capacity for cyclic sorption and desorption of $CO_2$. Two journal articles by Li et al., describe the preparation and use of CaO-calcium aluminate granular material for cyclic sorption and desorption of $CO_2$. The first is "Synthesis, Experimental Studies, and Analysis of a New Calcium-Based Carbon Dioxide Absorbent," Energy and Fuels, Vol. 19, pp. 1447-1452 (2005). The second is "Effect of Preparation Temperature on Cyclic CO2 Capture and Multiple Carbonation - calcination Cycles for a New Ca-Based CO2 Sorbent," Ind. Eng. Chem. Res., Vol. 45, pp. 1911-1917 (2006). These journal articles describe preparation of granules with CaO as a starting material. Specifically, they describe preparing granules by calcining CaO or $CaCO_3$ first at high temperature to produce CaO. CaO and aluminum nitrate anhydrate are then mixed with 2-propanol and distilled water. The solution is dried at 110°C and calcined at 500°C to produce a fine and porous powder containing a mixture of CaO and alumina. The powder is finally calcined in air at 900°C and ground to produce granular material of desired size. In any case the starting material for producing granules of CaO-calcium aluminate is CaO. The granules have been shown to lose $CO_2$ capacity with time or number of cycles. These articles therefore do not describe how to produce dimensionally stable and strong CaO-calcium aluminate pellets or granules with stable $CO_2$ sorption and desorption capacity.

Journal articles by Martavaltzi and Lemonidou titled "Parametric Study of the CaO-Ca12Al14O33 Synthesis with Respect to High CO2 Sorption Capacity and Stability on Multicycle Operation," Ind. Eng. Chem. Res.

2008, 47, 9537-9543 and "Development of new CaO based sorbent materials for CO2 removal at high temperature," Microporous and Mesoporous Materials, Vol. 110, pp. 119-127 (2008), describe preparation and use of CaO-calcium aluminate granules for cyclic sorption and desorption of $CO_2$. The procedure for preparing CaO-$Ca_{12}Al_{14}O_{33}$ is similar to that described in the two articles by Li et al. with the exception of using calcium acetate as a precursor for CaO. Once again, the granules produced have been shown to lose $CO_2$ capacity with time or number of cycles. These articles therefore do not describe how to produce dimensionally stable and strong CaO-calcium aluminate pellets or granules with stable $CO_2$ sorption and desorption capacity.

Considerable progress has also been made to show utility of $CO_2$ sorbent powders for improving process for producing hydrogen. For example, a journal article by Yi and Harrison titled "Low-Pressure Sorption-Enhanced Hydrogen Production," Ind. Eng. Chem. Res. 2005, 44, pp. 1665-1669, describes the use of a mixture of reforming catalyst and $CO_2$ sorbent for enhanced hydrogen production. A pre-calcined dolomite in the powder form (particle size varying from 150 to 300 microns) was used as a $CO_2$ sorbent. The article does not describe how to regenerate dolomite powder loaded with carbon dioxide. Furthermore, it does not describe how to produce dimensionally stable and strong CaO-calcium aluminate pellets or granules with stable $CO_2$ sorption and desorption capacity.

Progress has also been made in producing pellets from metal oxides. For example, a journal article by Wu, Beum, Yang and Kim titled "Properties of Ca-Based CO2 Sorbent Using Ca(OH)2 as Precursor" Ind. Eng. Chem. Res. 2007, 46, 7896-7899, describes the use of pellets produced by 85% $CaCO_3$ and 15% clay binder or 85% $Ca(OH)_2$ and 15% clay binder for cyclic $CO_2$ sorption and desorption. These pellets were shown to lose a significant $CO_2$ sorption capacity in just 15 cycles. No information was provided regarding dimensional stability and strength of fresh and used pellets.

U.S. Pat. Publication No. 2005/0112056, now U.S. Pat. No. 7,267,811, discloses a method for making CaO based material that is useful in adsorption-enhanced steam methane reforming process. Fine composite particles containing adsorbent phase and catalyst phase were prepared by (1) forming a precursor solution containing a liquid, precursor for an adsorbent phase and precursor for a catalyst phase, (2) atomizing the precursor solution to form precursor droplets, (3) heating the precursor droplets. The fine composite particles were then mixed with suitable support material such as alumina or titania to form pellets. A support material such as alumina or titania cannot be used to make pellets with a CaO based material because CaO will eventually react with alumina or titania and form calcium aluminate or calcium titanate. This will cause decrease in carbon dioxide capacity of CaO after only a few cycles.

A journal article by Satrio, Shanks and Wheelock titled "Development of a Novel Combined Catalyst and Sorbent for Hydrocarbon Reforming," Ind. Eng. Chem. Res. 2005,. 44, 3901-3911, describes the use of small spherical pellets with highly reactive lime or dolomite core enclosed within a strong and porous alumina shell impregnated with nickel catalyst for enhanced hydrogen production. The article concluded that work was continuing to improve physical strength and attrition resistance of the combined catalyst/sorbent pellets.

It has been found that conventional methods are not suitable for forming dimensionally stable pellets or granules from calcium and/or magnesium oxides. This is because calcium and/or magnesium oxides undergo a significant volumetric expansion and contraction due to the sorption and desorption of $CO_2$. Because of the expansion and contraction, pellets or granules, which are formed from calcium and/or magnesium oxides using conventional binders and conventional techniques such as spray drying, extrusion or pelletization of powder, fall apart within a few $CO_2$ sorption and desorption cycles. The use of conventional binders such as alumina, titania, and zirconia are not suitable for preparing pellets or granules from calcium or magnesium oxide as they react with them, rendering them to be ineffective in absorbing carbon dioxide. Additionally, pellets or granules prepared with conventional calcium or magnesium aluminate, titanate or zirconate binders do not have enough porosity, as they fall apart within a few carbon dioxide sorption and desorption cycles. Furthermore, the pellets or granules prepared from calcium and/or magnesium oxides using conventional binders and conventional techniques do not have sufficient crush strength to be useful in a fixed bed reactor, a fluidized bed reactor, a moving bed reactor, or an expanded bed reactor.

Industry desires pellets or granules containing calcium oxide and/or magnesium oxide which have sustained performance as well as structural and dimensional stability.

BRIEF SUMMARY

The present invention relates to aggregates (pellets and/or granules) suitable for carbon dioxide sorption, a method for making aggregates (pellets and/or granules) suitable for carbon dioxide sorption, aggregates (pellets and/or granules) made by the method, an apparatus for producing a $CC_2$-depleted gas from a $CO_2$-containing gas using the aggregates (pellets and/or granules), a process for producing a $CO_2$-depleted gas from a $CO_2$-containing gas using the aggregates (pellets and/or granules), a reactor for producing a hydrogen-containing gas using the aggregates (pellets and/or granules), and a process for producing a hydrogen-containing gas using the aggregates (pellets and/or granules).

The aggregates suitable for carbon dioxide sorption comprise: 25 to 85 mass % or 35 to 85 mass % of at least one binding agent selected from calcium titanate, calcium aluminate, calcium zirconate, magnesium titanate, magnesium aluminate, and magnesium zirconate; and 15 to 75 mass % or 15 to 65 mass % of calcium oxide, magnesium oxide or a mixture of calcium oxide and magnesium oxide; wherein the aggregate is a pellet or a granule having a median pore diameter in a range of 500 nm (5,000 ångströms) to 5000 nm (50,000 ångströms) and a porosity in a range of 45 % to 80 % or 60 % to 75 %.

As pellets, the aggregates may have a characteristic length of 0.1 mm to 3 mm.

As granules, the aggregates may have a characteristic length of 50 microns to 3 mm, or from 75 microns to 2 mm, or from 75 microns to 1000 microns.

The aggregates may optionally comprise at least one metal selected from Ni, Pt, Rh, and Pd. The pellets or granules may comprise 0.1 to 10 mass % of at least one metal selected from Ni, Pt, Rh, and Pd.

The pellets may have a crush strength of 1 to 15 lbf/mm (4 to 67 N/mm) as determined in accordance with ASTM standard test method D 6175-03.

The pellets may have a structure wherein the crush strength of the pellet is retained within 1 to 15 lbf/mm (4 to 67 N/mm) after 50 cycles of $CO_2$ sorption and $CO_2$ desorption wherein the $CO_2$ sorption is by exposing the pellet to a humidified $CO_2$-containing gas comprising 97 to 98 vol. % $CO_2$ at 750°C and $CO_2$ desorption is by exposing the pellet to humidified air at 750°C. The humidified $CO_2$-containing gas may comprise 2 to 3 vol. % $H_2O$. The humidified air may comprise 2 to 3 vol. % $H_2O$.

The granules may have a structure wherein the granules retain their shape and size after 50 cycles of $CO_2$ sorption and $CO_2$ desorption wherein the $CO_2$ sorption is by exposing the granule to a humidified $CO_2$-containing gas comprising 97 to 98 vol. % $CO_2$ at 750°C and $CO_2$ desorption is by exposing the granule to humidified air at 750°C. The humidified $CO_2$-containing gas may comprise 2 to 3 vol. % $H_2O$. The humidified air may comprise 2 to 3 vol. % $H_2O$.

The calcium titanate may be formed by reaction of at least one calcium precursor and $TiO_2$ in a mixture with at least one of calcium carbonate and magnesium carbonate.

The calcium aluminate may be formed by reaction of at least one calcium precursor and at least one of alumina, aluminum hydroxide and aluminum oxide hydroxide in a mixture with at least one of calcium carbonate and magnesium carbonate.

The calcium zirconate may be formed by reaction of at least one calcium precursor and zirconia in a mixture with at least one of calcium carbonate and magnesium carbonate.

The magnesium titanate may be formed by reaction of at least one magnesium precursor and $TiO_2$ in a mixture with at least one of calcium carbonate and magnesium carbonate.

The magnesium aluminate may be formed by reaction of at least one magnesium precursor and at least one of alumina, aluminum hydroxide and aluminum oxide hydroxide in a mixture with at least one of calcium carbonate and magnesium carbonate.

The magnesium zirconate may be formed by reaction of at least one magnesium precursor and zirconia in a mixture with at least one of calcium carbonate and magnesium carbonate.

The method for making an aggregate suitable for carbon dioxide sorption comprises the steps of:

(a) preparing a mixture, the mixture comprising:

at least one of calcium carbonate and magnesium carbonate in an amount to provide the 15 to 75 mass % or 15 to 65 mass % of calcium oxide, magnesium oxide or mixture of calcium oxide and magnesium oxide in the aggregate;
at least one of a calcium precursor and a magnesium precursor in an amount to provide the 25 to 85 mass % or 35 to 85 mass % of the at least one binding agent in the aggregate;
at least one of $TiO_2$, $Al_2O_3$, $ZrO_2$, $Al(OH)_3$ and $AlO(OH)$ in an amount to provide the 25 to 85 mass % or 35 to 85 mass % of the at least one binding agent in the aggregate; and
20 to 80 mass % water;

(b) forming a green aggregate from the mixture;
(c) heating the green aggregate from a first temperature to a second temperature at a first average heating rate of 0.1°C/minute to 10°C/minute,
wherein the first temperature is within a first temperature range wherein the first temperature range is between 5°C and 50°C, and
wherein the second temperature is a minimum temperature of a second temperature range, the second temperature range extending from the minimum temperature of the second temperature range to a maximum temperature of the second temperature range wherein the minimum temperature of the second temperature range is 600°C and the maximum temperature of the second temperature range is 750°C;
(d) maintaining the green aggregate within the second temperature range for a first time period of between 15 minutes and 4 hours;
(e) heating the green aggregate from the maximum temperature of the second temperature range to a third temperature at a second average rate of 0.1°C/minute to 10°C/minute,
wherein the third temperature is a minimum temperature of a third temperature range, the third temperature range extending from the minimum temperature of the third temperature range to a maximum temperature of the third temperature range wherein the minimum temperature of the third temperature range is 900°C and the maximum temperature of the third temperature range is 1050°C;

(f) maintaining the green aggregate within the third temperature range for a second time period of between 15 minutes and 4 hours; and
(g) cooling the green aggregate to a fourth temperature, wherein the fourth temperature is within a fourth temperature range wherein the fourth temperature range is between 0°C and 50°C, to make the aggregate;
wherein the green aggregate is exposed to an atmosphere comprising oxygen during at least one of steps (a) through (f).

The aggregate may be a pellet and the mixture may comprise 20 to 40 mass % water.

In the method, the green aggregate may be exposed to the atmosphere comprising oxygen during all of steps (a) through (f).

The mixture may further comprise 0.1 to 10 mass % of at least one metal selected from Ni, Pt, Rh, and Pd.

The calcium precursor may be selected from CaO, $Ca(OH)_2$, $CaCO_3$, $Ca(NO_3)_2$ and $Ca(CH_3CO_2)_2$.

The magnesium precursor may be selected from MgO, $Mg(OH)_2$, $MgCO_3$, $Mg(NO_3)_2$ and $Mg(CH_3CO_2)_2$.

The apparatus for producing a $CO_2$-depleted gas from a $CO_2$-containing gas comprises a bed containing a plurality of the described aggregates. The bed may be a fixed bed and the aggregates may be pellets. The bed may be a fluidized bed or a moving bed and the aggregates may be granules.

The process for producing a $CO_2$-depleted gas from a $CO_2$-containing gas comprises:

(i) passing the $CO_2$-containing gas through a bed containing a plurality of the described aggregates under conditions sufficient to sorb $CO_2$ and form calcium carbonate and/or magnesium carbonate with the plurality of aggregates and thereby forming the $CO_2$-depleted gas;
(ii) regenerating the bed by passing a purge gas through the bed under conditions sufficient to liberate $CO_2$ from the plurality of aggregates and withdrawing a by-product gas comprising $CO_2$ from the bed; and
(iii) repeating (i) and (ii) in a cyclic manner.

The conditions sufficient to sorb $CO_2$ and form calcium carbonate and/or magnesium carbonate may include a temperature ranging from 600°C to 800°C, preferably 650°C to 800°C, and a pressure ranging from 1 to 100 atmospheres (1 to 100 bar).

The conditions sufficient to liberate $CO_2$ may include a temperature ranging 650°C to 900°C and a pressure ranging from 0.9 to 100 atmospheres (0.9 to 100 bar) or a pressure ranging from 0.9 to 2 atmospheres (0.9 to 2 bar).

The purge gas may comprise at least one of oxygen, nitrogen and/or steam. The purge gas may comprise at least one of nitrogen and steam and may optionally comprise oxygen. The purge gas may be air or steam.

The reactor for producing a hydrogen-containing gas comprises a bed containing $CO_2$-sorptive aggregates and optionally containing steam-hydrocarbon reforming catalyst in a suitable form, wherein the $CO_2$-sorptive aggregates are the aggregates as described herein, and wherein if the bed does not contain steam-hydrocarbon reforming catalyst then at least a plurality of the $CO_2$-sorptive aggregates include at least one metal selected from Ni, Pt, Rh and Pd.

The process for producing a hydrogen-containing gas comprises:

(i) in a production step, introducing steam and a feed gas containing methane into a bed, the bed containing $CO_2$-sorptive aggregates and optionally containing steam-hydrocarbon reforming catalyst, wherein the $CO_2$-sorptive aggregates are the aggregates as described herein, and wherein if the bed does not contain steam-hydrocarbon reforming catalyst then at least a plurality of the $CO_2$-sorptive aggregates include at least one metal selected from Ni, Pt, Rh and Pd, reacting the methane and the steam in the presence of the at least one metal and/or the steam-hydrocarbon reforming catalyst under reaction conditions sufficient to form hydrogen, sorb $CO_2$ and form calcium carbonate and/or magnesium carbonate, and withdrawing a product gas comprising hydrogen from the reactor;

(ii) in a regeneration step, regenerating the $CO_2$-sorptive aggregates by passing a purge gas through the bed under conditions sufficient to liberate $CO_2$ from the $CO_2$-sorptive aggregates and withdrawing a by-product gas comprising $CO_2$ from the bed; and

(iii) repeating (i) and (ii) in a cyclic manner.

Optionally, the bed may additionally contain one or more metal oxides. The purpose of the metal oxides is to serve as a source of oxygen during the production step. During the production step, the metal oxide undergoes reduction to a metallic form or a metal oxide of lower valence. The metal or metal oxide of lower valence undergoes oxidation to an oxide, or an oxide of higher valence in a regeneration step.

The reaction conditions sufficient to form hydrogen, sorb $CO_2$ and form calcium carbonate and/or magnesium carbonate may include a temperature ranging from 350°C to 800°C or 600°C to 800°C, and a pressure ranging from 1 to 100 atmospheres (1 to 100 bar).

The conditions sufficient to liberate $CO_2$ may include a temperature ranging 450°C to 900°C and a pressure ranging from 0.9 to 100 atmospheres (0.9 to 100 bar) or a pressure ranging from 0.9 to 2 atmospheres (0.9 to 2 bar).

The purge gas may comprise oxygen, nitrogen, and/or steam. The purge gas may comprise at least one of nitrogen and steam and may optionally comprise oxygen. The purge gas may be air or steam.

For the case where metal oxide is used, the purge gas may be any oxygen-containing gas, for example air, oxygen-enriched air and oxygen-depleted air. The oxygen-containing gas may further comprise nitrogen and/or steam.

The one or more metal oxides may be metallic oxides corresponding to any known non-precious metal based steam-methane reforming catalyst known in the art. The one or more metal oxides may be metallic oxides of Ni, Cu and/or Fe. The metal oxides may be unsupported or supported. The metal oxides may be supported on an inert ceramic support. The composition of the inert ceramic support may be alumina, titania, zirconia, calcium aluminate, calcium titanate, calcium zirconate or mixtures thereof.

BRIEF DESCRIPTION OF SEVERAL VIEWS OF THE DRAWINGS

FIG. 1 is a process flow sheet for producing a $CO_2$-depleted gas from a $CO_2$-containing gas.

FIG. 2 is a process flow sheet for the generation of hydrogen using the disclosed method, process, and reactor.

DETAILED DESCRIPTION

The articles "a" and "an" as used herein mean one or more when applied to any feature in embodiments of the present invention described in the specification and claims. The use of "a" and "an" does not limit the meaning to a single feature unless such a limit is specifically stated. The definite article "the" preceding singular or plural nouns or noun phrases denotes a particular specified feature or particular specified features and may have a singular or plural connotation depending upon the context in which it is used. The adjective "any" means one, some, or all indiscriminately of whatever quantity.

As used herein "at least a portion" means "a portion or all."

"Plurality" means two or more.

As used herein "sorption" and "sorbing" include adsorption, absorption and reversible chemical reaction.

As used herein, "calcium oxide and/or magnesium oxide" includes calcium oxide by itself, magnesium oxide by itself, and any mixture of calcium oxide and magnesium oxide.

As used herein, an "aggregate" is a clustered mass of individual particles varied in shape, and varied in size including microscopic granules. Pellets and granules are examples of aggregates.

The present invention relates to aggregates suitable for carbon dioxide sorption, a method for making aggregates suitable for carbon dioxide sorption, aggregates made by the method, an apparatus for producing a $CO_2$-depleted gas from a $CO_2$-containing gas using the aggregates, a process for producing a $CO_2$-depleted gas from a $CO_2$-containing gas using the aggregates, a reactor for producing a hydrogen-containing gas using the aggregates, and a process for producing a hydrogen-containing gas using the aggregates.

The aggregates suitable for carbon dioxide sorption may also be referred to as $CO_2$-sorptive aggregates.

The aggregates suitable for carbon dioxide sorption comprise 25 to 85 mass % or 35 to 85 mass % of at least one binding agent selected from calcium titanate, calcium aluminate, calcium zirconate, magnesium titanate, magnesium aluminate, and magnesium zirconate; and 15 to 75 mass % or 15 to 65 mass % of calcium oxide, magnesium oxide or a mixture of calcium oxide and magnesium oxide; wherein the aggregate has a median pore diameter in a range of 500 nm (5,000 ångströms) to 5000 nm (50,000 ångströms) or a range of 900 nm (9,000 ångströms) to 4000 nm (40,000 ångströms) and a porosity in a range of 45 % to 80 % or 45 % to 75 %.

Median pore diameter and porosity were determined by mercury porosimetry at about 60,000 psi (about 410 MPa). Mercury porosimetry instruments and/or analysis may be provided by Micromeritics Instrument Corporation.

The lower limit for the at least one binding agent may be 25 or 30 or 35 or 40 or 45 mass %. The upper limit for the at least one binding agent may be 85 or 80 or 75 or 70 or 65 or 60 or 55 mass %. The lower limit for the calcium oxide, magnesium oxide or mixture of calcium oxide and magnesium oxide may be 15 or 20 or 25 or 30 or 35 or 40 or 45 mass %. The upper limit for the calcium oxide, magnesium oxide or mixture of calcium oxide and magnesium oxide may be 75 or 70 or 65 or 60 or 55 or 50 mass %.

The aggregate may be a pellet and the pellet may have a characteristic length of 0.1 mm to 3 mm.

A pellet is defined herein as a densely packed but porous mass formed from smaller particles. A pellet is a self-supporting body. Suitable pellets may have a characteristic length of between 0.1 mm and 3 mm. The characteristic length is defined as the volume of the pellet divided by the outside surface area of the pellet. The pellet may have any regular or irregular shape as desired. The pellet may be in the shape of a sphere, cylinder, tablet or the like.

For example, a cylinder having a radius of 0.5 mm and a length of 3 mm, has a volume of about 2.356 $mm^3$, an outside surface area of about 11 $mm^2$, and therefore a characteristic length of about 0.214 mm. A sphere having a radius of 3 mm has a characteristic length of 1 mm.

The aggregates may be granules. The size (e.g. characteristic length) of the granules may vary from 50 microns to 3 mm, or from 75 microns to 2 mm, or from 75 micron to 1000 microns.

The aggregates may comprise 25 to 85 mass % or 35 to 85 mass % of only one binding agent selected from calcium titanate, calcium aluminate, calcium zirconate, magnesium titanate, magnesium aluminate, and magnesium zirconate. Alternatively, the aggregates may comprise 25 to 85 mass % or 35 to 85 mass % of more than one binding agent selected from calcium titanate, calcium aluminate, calcium zirconate, magnesium titanate, magnesium aluminate, and magnesium zirconate in combination.

As used herein, the term "calcium aluminate" means any of the various calcium aluminates, for example tricalcium aluminate ($3CaO.Al_2O_3$), dodecacalcium hepta-aluminate ($12CaO.7Al_2O_3$), monocalcium aluminate ($CaO.Al_2O_3$), monocalcium dialuminate ($CaO.2Al_2O_3$), monocalcium hexa-aluminate ($CaO.6Al_2O_3$), dicalcium aluminate ($2CaO.Al_2O_3$), pentacalcium trialuminate ($5CaO.3Al_2O_3$), tetracalcium trialuminate ($4CaO.3Al_2O_3$) and mixtures thereof. The calcium aluminate may contain a minor amount of free CaO that is not tied with alumina.

Likewise, the term "calcium titanate," calcium zirconate," "magnesium titanate," "magnesium aluminate" and "magnesium zirconate" refers any of the various forms of the respective compounds..

The $CO_2$-sorptive aggregates may comprise 25 to 85 mass % or 35 to 85 mass % of a mixture of tricalcium aluminate and dodecacalcium hepta-aluminate. The $CO_2$-sorptive aggregates may comprise 25 to 85 mass % or 35 to 85 mass % of a mixture of monocalcium aluminate and dodecacalcium hepta-aluminate. The $CO_2$-sorptive aggregates may comprise 25 to 85 mass % or 35 to 85 mass % of a mixture of tricalcium aluminate, monocalcium aluminate and dodecacalcium hepta-aluminate. The $CO_2$-sorptive aggregates may comprise 25 to 85 mass % or 35 to 85 mass % of a mixture of monocalcium aluminate and monocalcium dialuminate. The $CO_2$-sorptive aggregates may comprise 25 to 85 mass % or 35 to 85 mass % of a mixture of monocalcium dialuminate and monocalcium hexa-aluminate.

The aggregates may optionally comprise at least one metal selected from Ni, Pt, Rh, and Pd. The aggregates may comprise 0.1 to 10 mass % of at least one metal selected from Ni, Pt, Rh, and Pd. These metals may be added to catalyze the reforming reaction.

The aggregates may be pellets. The pellets may have any suitable crush strength. The pellets may have a crush strength of 1 to 15 lbf/mm (4 to 67 N/mm) as determined in accordance with ASTM standard test method D 6175-03.

As referred to herein, the value representing "crush strength" is determined by the American Society for Testing Materials (ASTM) Standard Test Method D 6175-03 "Standard Test Method for Radial Crush Strength of Extruded Catalyst and Catalyst Carrier Particles."

The pellets may have a structure wherein the crush strength of the pellet is retained within 1 to 15 lbf/mm (4 to 67 N/mm) after 50 cycles of $CO_2$ sorption and $CO_2$ desorption wherein the $CO_2$ sorption is by exposing the pellet to a humidified $CO_2$-containing gas comprising 97 to 98 vol. % $CO_2$ and 2 to 3 vol. % $H_2O$ at 750°C and $CO_2$ desorption is by exposing the pellet to humidified air comprising 2 to 3 vol. % $H_2O$ at 750°C.

The aggregates may be granules. The granules may have a structure wherein the granules retain their shape and size after 50 cycles of $CO_2$ sorption and $CO_2$ desorption wherein the $CO_2$ sorption is by exposing the granule to a humidified $CO_2$-containing gas comprising 97 to 98 vol. % $CO_2$ and 2 to 3 vol. % $H_2O$ at 750°C at 750°C and $CO_2$ desorption is by exposing the granule to humidified air comprising 2 to 3 vol. % $H_2O$ at 750°C.

The calcium titanate may be formed by reaction of at least one calcium precursor and $TiO_2$ in a mixture with at least one of calcium carbonate and magnesium carbonate under reaction conditions sufficient to form calcium titanate. Reaction conditions sufficient to form calcium titanate may include a temperature range of 600°C to 1050°C and a pressure range of 0.1 atm to 100 atm (0.1 to 100 bar).

The calcium aluminate may be formed by reaction of at least one calcium precursor and at least one of alumina, aluminum hydroxide and aluminum oxide hydroxide in a mixture with at least one of calcium carbonate and magnesium carbonate under reaction conditions sufficient to form calcium aluminate. Reaction conditions sufficient to form calcium aluminate may include a temperature range of 600°C to 1050°C and a pressure range of 0.1 atm to 100 atm (0.1 to 100 bar).

The calcium zirconate may be formed by reaction of at least one calcium precursor and zirconia in a mixture with at least one of calcium carbonate and magnesium carbonate under reaction conditions sufficient to form calcium zirconate. Reaction conditions sufficient to form calcium zirconate may include a temperature range of 600°C to 1050°C and a pressure range of 0.1 atm to 100 atm (0.1 to 100 bar).

The magnesium titanate may be formed by reaction of at least one magnesium precursor and $TiO_2$ in a mixture with at least one of calcium carbonate and magnesium carbonate under reaction conditions sufficient to form magnesium titanate. Reaction conditions sufficient to form magnesium titanate may include a temperature range of 600°C to 1050°C and a pressure range of 0.1 atm to 100 atm (0.1 to 100 bar).

The magnesium aluminate may be formed by reaction of at least one magnesium precursor and at least one of alumina, aluminum hydroxide and aluminum oxide hydroxide in a mixture with at least one of calcium carbonate and magnesium carbonate under reaction conditions sufficient to form magnesium aluminate. Reaction conditions sufficient to form magnesium aluminate may include a temperature range of 600°C to 1050°C and a pressure range of 0.1 atm to 100 atm (0.1 to 100 bar).

The magnesium zirconate may be formed by reaction of at least one magnesium precursor and zirconia in a mixture with at least one of calcium carbonate and magnesium carbonate under reaction conditions sufficient to form magnesium zirconate. Reaction conditions sufficient to form magnesium zirconate may include a temperature range of 600°C to 1050°C and a pressure range of 0.1 atm to 100 atm (0.1 to 100 bar).

Aggregates suitable for carbon dioxide sorption may be made by a method of making a aggregate comprising (a) preparing a mixture comprising water, at least one of calcium carbonate and magnesium carbonate, at least one of a calcium precursor and a magnesium precursor, at least one of $Al(OH)_3$, $AlO(OH)$, $Al_2O_3$, $TiO_2$, and $ZrO_2$, and optionally a pore former; (b) forming a green aggregate from the mixture; (c) heating the green aggregate; (d) maintaining the green aggregate within a temperature range for a first time period; (e) heating the green aggregate further; (f) maintaining the green aggregate within another temperature range for a second time period; and (g) cooling the green aggregate to make the aggregate. The green aggregate is exposed to an atmosphere comprising oxygen during at least one of the steps (a) through (f). The green aggregate may be exposed to an atmosphere comprising oxygen during all of the steps (a) through (f). The atmosphere comprising oxygen may be air.

As used herein, "green" means not fully processed or fully treated.

In the step of preparing the mixture, the mixture comprises calcium carbonate, magnesium carbonate or a mixture of calcium carbonate and magnesium carbonate in an amount to provide 15 to 75 mass % or 15 to 65 mass % of the calcium oxide, magnesium oxide or mixture of calcium oxide and magnesium oxide in the aggregate. The mixture also comprises at least one of a calcium precursor and a magnesium precursor in an amount to provide 25 to 85 mass % or 35 to 85 mass % of the binding agent in the aggregate. The mixture also comprises at least one of $TiO_2$, $Al_2O_3$, $ZrO_2$, $Al(OH)_3$ and $AlO(OH)$ in an amount to provide 25 to 85 mass % or 35 to 85 mass % of the binding agent, which is formed in-situ in the aggregate. The mixture also comprises 20 to 40 mass % water for making pellets and 20 to 80 mass % water for making granules. One skilled in the art can calculate the amount of starting material to form the desired concentration of constituents in the final aggregate.

The calcium carbonate and/or magnesium carbonate may have a particle size between 0.1 and 74 microns or between 0.1 and 44 microns. Calcium carbonate, magnesium carbonate and mixtures of calcium carbonate and magnesium carbonate are commercially available. They can also be synthesized by precipitating them from water soluble salts of calcium and/or magnesium.

The amount of calcium carbonate and/or magnesium carbonate used in the mixture may be adjusted to provide the amount of free calcium oxide and/or magnesium oxide desired in the aggregate for $CO_2$ sorption and desorption. The calcium carbonate and/or magnesium carbonate decomposes during the calcinations, producing pores in the aggregate due to the release of $CO_2$. Calcium precursor and/or magnesium precursor (e.g. calcium oxide and/or magnesium oxide) used in the mixture is provided in an amount sufficient to react with the $TiO_2$, $Al_2O_3$, $ZrO_2$, $Al(OH)_3$ and/or $AlO(OH)$ during calcinations and form an amount of the respective binding agent in-situ and effective to provide strength and hold the particles together.

The $TiO_2$ may be in Anatase form. Alumina may be in the form of gamma alumina. Aluminum hydroxide may be in the form of boehmite. The $TiO_2$, alumina, zirconia and aluminum hydroxide may have particle sizes between 0 and 10 microns.

The calcium precursor used for forming calcium titanate, calcium aluminate or calcium zirconate may be selected from $CaO$, $Ca(OH)_2$, $CaCO_3$, $Ca(NO_3)_2$ and $Ca(CH_3CO_2)_2$. The calcium precursor may have a particle size between 0.1 and 10 microns.

The magnesium precursor used for forming magnesium titanate, magnesium aluminate or magnesium zirconate may be selected from $MgO$, $Mg(OH)_2$, $MgCO_3$, $Mg(NO_3)_2$ and $Mg(CH_3CO_2)_2$. The magnesium precursor may have a particle size between 0 and 10 microns.

The mixture may optionally further comprise 0.1 to 5 mass % or 1 to 3 mass % of a pore former. The pore former may be methocel pore former or other pore former known in the art. Suitability of various pore former may be determined without undue experimentation. The use of an optional pore former permits further adjustment of internal porosity.

The mixture may optionally further comprise 0.1 to 10 mass % or 0.2 to 5 mass % of at least one metal selected from Ni, Pt, Rh, and Pd.

In the step of forming the aggregate where the aggregate is a pellet, the pellet may be formed by extruding the mixture through a die thereby forming an extrudate-type pellet. Alternatively, the pellet may be formed by compressing the mixture in a mold. Any method of forming a pellet known in the art may be used.

The aggregate may be optionally dried for 6 to 24 hours in air. The aggregate may be optionally dried in an oven at 105°C to 125°C for 6 to 24 hours in air.

In the step of forming granular material, the granular material may be formed from the slurry by spray drying or any other method of forming granular material known in the art.

In the step of forming the aggregate where the aggregate is a granule, the granules may be formed by spray drying or other technique known in the art.

In the step of heating the green aggregate, the green aggregate is heated from a first temperature, $T_1$, to a second temperature, $T_2$, at a first average heating rate between 0.1°C/minute to 10°C/minute. The first temperature $T_1$, is within a first temperature range, wherein the first temperature range is between 5°C and 50°C. The first temperature may be room temperature (about 25°C). The second temperature $T_2$, is a minimum temperature, $T_{2min}$, of a second temperature range, the second temperature range extending from the minimum temperature, $T_{2min}$, of the second temperature range to a maximum temperature, $T_{2max}$, of the second temperature range. The minimum temperature, $T_{2min}$, of the second temperature range may be 600°C or 650°C and the maximum temperature, $T_{2max}$, of the second temperature range may be 700°C or 750°C.

In the step of heating the green aggregate, the time to heat from the first temperature to the second temperature is the first heating time, $t_1$. The first average heating rate is defined as $\dfrac{T_2 - T_1}{t_1}$.

In the step of maintaining the green aggregate within a temperature range for a first time period, the green aggregate is maintained within the second temperature range and the first time period is between 15 minutes and 4 hours. When maintaining the temperature within the second temperature range, the temperature may be increased and/or decreased within the second temperature range.

In the step of heating the green aggregate further; the green aggregate is heated from the maximum temperature, $T_{2max}$, of the second temperature range to a third temperature, $T_3$, at a second average rate of 0.1°C/minute to 10°C/minute, wherein the third temperature is a minimum temperature, $T_{3min}$, of a third temperature range, the third temperature range extending from the minimum temperature, $T_{3min}$, of the third temperature range to a maximum temperature, $T_{3max}$, of the third temperature range wherein the minimum temperature, $T_{3min}$, of the third temperature range is 900°C and the maximum temperature, $T_{3max}$, of the third temperature range is 1050°C.

In the step of heating the green aggregate further, the time to heat from the maximum temperature, $T_{2max}$, of the second temperature range to the third temperature, $T_3$, is the second heating time, $t_2$. The second average rate is defined as $\dfrac{T_3 - T_{2max}}{t_2}$.

In the step of maintaining the green aggregate within another temperature range for a second time period, the aggregate is maintained within the third temperature range and the second time period is between 15 minutes and 4 hours. When maintaining the temperature within the third temperature range, the temperature may be increased and/or decreased within the third temperature range.

In the step of cooling the green aggregate, the aggregate is cooled to a fourth temperature, $T_4$, wherein the fourth temperature is within a fourth temperature range. The fourth temperature range is between 0°C and 50°C. The fourth temperature may be, for example, room temperature. Cooling may be by one or more of natural convection, forced convection, conduction and radiation. The rate or method of cooling is not critical.

The apparatus for producing a $CO_2$-depleted gas from a $CO_2$-containing gas comprises a bed containing a plurality of the described aggregates. The bed may be a fixed bed, ebullated bed, expanded bed, moving bed or fluidized bed type apparatus. The various types of beds are well-known in the art.

The apparatus can be constructed by one skilled in the art. Suitable materials of construction are known in the art for the process conditions. The apparatus may be insulated if desired and may be operated adiabatically if desired.

A $CO_2$-depleted gas is any gas formed from a $CO_2$-containing gas and having a $CO_2$ concentration less than the $CO_2$-containing gas. A $CO_2$-containing gas is any gas containing $CO_2$.

The $CO_2$-containing gas may be a flue gas (i.e. combustion products from a furnace, boiler or the like), or other $CO_2$-containing gas stream. Sulfur-containing gases may be removed from the $CO_2$-containing stream prior to removing $CO_2$.

The process for producing a $CO_2$-depleted gas from a $CO_2$-containing gas comprises:

(i) passing the $CO_2$-containing gas through a bed containing a plurality of the described aggregates under conditions sufficient to sorb $CO_2$ and form calcium carbonate and/or magnesium carbonate with the plurality of aggregates and withdrawing the $CO_2$-depleted gas;

(ii) regenerating the bed by passing a purge gas through the bed under conditions sufficient to liberate $CO_2$ from the plurality of aggregates and withdrawing a by-product gas comprising $CO_2$ from the reactor; and

(iii) repeating (i) and (ii) in a cyclic manner.

The conditions sufficient to sorb $CO_2$ and form calcium carbonate and/or magnesium carbonate may include a temperature ranging from 600°C to 800°C, preferably 650°C to 800°C, and a pressure ranging from 1 to 100 atmospheres (1 to 100 bar).

The conditions sufficient to liberate $CO_2$ may include a temperature ranging 650°C to 900°C and a pressure ranging from 0.9 to 100 atmospheres (0.9 to 100 bar) or a pressure ranging from 0.9 to 2 atmospheres (0.9 to 2 bar).

The $CO_2$ removal may be characterized by a sorption temperature and the regeneration step may be characterized by a regeneration temperature, wherein the regeneration temperature may be greater than the sorption temperature and wherein the difference between the regeneration temperature and the sorption temperature may be 200°C or less.

The purge gas may comprise oxygen, nitrogen and/or steam. The purge gas may comprise at least one of nitrogen and steam and may optionally comprise oxygen. The purge gas may be air or steam.

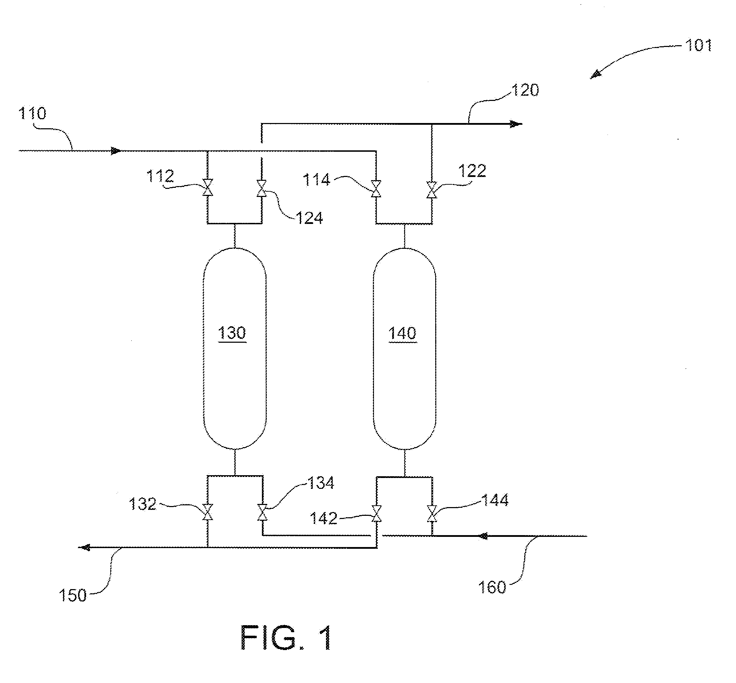

The process will be illustrated with reference to FIG. 1.

A process flow diagram for an apparatus 101 for producing a $CO_2$-depleted gas from a $CO_2$-containing gas is shown in FIG. 1.

A $CO_2$-containing gas stream 110 is introduced into bed 130 by way of valve 112. Valve 124 is closed. The $CO_2$-containing gas is passed into bed 130, which contains the $CO_2$ sorbing aggregates described herein. The $CO_2$-containing gas is passed through the bed 130 under conditions sufficient to sorb $CO_2$ and form calcium carbonate and/or magnesium carbonate and thereby form $CO_2$-depleted gas 150 which is withdrawn via valve 132. Valve 134 is closed.

After a time, which depends on the size of the bed 130, the bed will become substantially saturated with $CO_2$ and will need to be regenerated. Valve 112 and valve 132 are closed and a purge gas 160 is passed via valve 134 through the bed 130 to liberate the $CO_2$ from the aggregates. A by-product gas 120 comprising $CO_2$ is withdrawn from the bed 130 via valve 124.

During the time that bed 130 is undergoing the regeneration step, bed 140 is forming the $CO_2$-depleted gas 150. The $CO_2$-containing gas stream 110 is introduced into bed 140 by way of valve 114. Valve 122 is closed. The $CO_2$-containing gas is passed into bed 140, which contains the $CO_2$ sorbing aggregates described herein. The $CO_2$-containing gas is passed through the bed 140 under conditions sufficient to sorb $CO_2$ and form calcium carbonate and/or magnesium carbonate and thereby form $CO_2$-depleted gas 150 which is withdrawn via valve 142. Valve 144 is closed.

During the time that bed 130 is producing the $CO_2$-depleted gas, bed 140 is regenerating. Valve 114 and valve 142 are closed and purge gas 160 is passed via valve 144 through bed 140 to liberate the $CO_2$ from the pellets in bed 140. By-product gas 120 comprising $CO_2$ is withdrawn from bed 140 via valve 122.

The beds operate cyclically.

While described as a process and apparatus using two beds, any suitable number of beds may be used.

The purge gas may be introduced into the beds from the same end (co-current) or from the opposite end (counter-current) as the process gas

When the beds are fixed beds, the aggregates are preferably pellets.

When the beds are one of ebullated, expanded, moving or fluidized beds, the aggregates are preferably granules.

In another aspect, the present invention relates to a reactor and a process for producing a hydrogen-containing gas by the reaction of one or more gaseous hydrocarbons with gaseous water, i.e. steam, under reaction conditions effective to form hydrogen.

The reactor for producing a hydrogen-containing gas comprises a bed containing $CO_2$-sorptive aggregates. The bed optionally contains steam-hydrocarbon reforming catalyst aggregates comprising a reforming catalyst, and optionally contains metal oxides of at least one of Cu, Fe and Ni. The purpose of the optional metal oxides is to promote the reforming reaction and to provide a source of oxygen during hydrogen production.

The reactor may be a fixed-bed reactor. The fixed-bed reactor may be a tubular reactor. The reactor may be an ebullated, expanded, fluidized bed, or moving bed reactor. The various reactor types are well-known in the art.

In order to carry out the steam-hydrocarbon reforming reaction, at least a portion of the $CO_2$-sorptive aggregates may comprise a catalyst material suitable for steam-hydrocarbon reforming and/or separate steam-hydrocarbon reforming catalyst aggregate (e.g. pellets or granules) and/or metal oxides of at least one of Cu, Fe and Ni may be contained in the bed. If desired, the bed may additionally contain other types of pellets or granules, flow directing devices, or the like.

At least a portion of the $CO_2$-sorptive aggregates comprise at least one metal selected from Ni, Pt, Rh and Pd when the bed does not contain steam-hydrocarbon reforming catalyst aggregates or metal oxides of at least one of Cu, Fe and Ni or other material capable of promoting the reforming reaction. Ni, Pt, Rh and/or Pd act as a catalyst for the steam-methane reforming reaction. The $CO_2$-sorptive aggregates may optionally comprise Ni, Pt, Rh and Pd when the bed does contain steam-hydrocarbon reforming catalyst aggregates or metal oxides capable of promoting the reforming reaction.

When at least one metal is included, the $CO_2$-sorptive aggregates may comprise 0.1 to 10 mass % or 0.2 to 5 mass % of at least one metal selected from Ni, Pt, Rh, and Pd.

When both $CO_2$-sorptive pellets and steam-hydrocarbon reforming catalyst pellets are used, it is preferred to have the pellet types distributed more or less evenly throughout the bed.

When $CO_2$-sorptive pellets, steam-hydrocarbon reforming catalyst pellets and metal oxide pellets are used, it is preferred to have the pellet types distributed more or less evenly throughout the bed.

When both $CO_2$-sorptive granules and steam-hydrocarbon reforming catalyst granules are used, it is preferred to have the granule types distributed more or less evenly throughout the bed.

When $CO_2$-sorptive granules, steam-hydrocarbon reforming catalyst granules and metal oxide granules are used, it is preferred to have the granule types distributed more or less evenly throughout the bed.

Suitable steam-hydrocarbon reforming catalyst pellets are known in the art and are available commercially. Suitable steam-hydrocarbon reforming process catalysts include any materials effective for the reforming of methane or higher hydrocarbons with steam to produce hydrogen. These materials may include, for example, any of nickel, cobalt, the platinum group metals (i.e. ruthenium, osmium, rhodium, palladium, platinum, and iridium) and oxides of the foregoing metals. The materials may be supported on zirconia, alumina, or other suitable supports known in the art.

Suitable steam-hydrocarbon reforming catalyst in granular form can be purchased from a commercial vendor or prepared by crushing and/or grinding the pelleted catalyst.

Suitable steam-hydrocarbon reforming catalyst for providing oxygen during the reforming reaction may include oxides of metals of at least one of Ni, Fe and Cu. These metals may be unsupported or supported, for example supported on zirconia, alumina, or other suitable supports known in the art.

A reactor comprising a bed of $CO_2$-sorptive aggregates and optionally containing steam-hydrocarbon reforming catalyst aggregates and/or metal oxides can be constructed by one skilled in the art of hydrogen production.

Suitable materials for the operating conditions are known. The construction of reactors for the production of hydrogen is known in the art.

The reactor may be insulated if desired. The reactor may be operated as an adiabatic reactor.

The process for producing a hydrogen-containing gas comprises reacting methane with steam in a bed of $CO_2$-sorptive aggregates in a production step under reaction conditions sufficient to form hydrogen gas and metal carbonate from calcium oxide and/or magnesium oxide-containing aggregates. At least a portion of the calcium oxide and/or magnesium oxide-containing aggregates may comprise a catalyst material suitable for steam-hydrocarbon reforming and/or separate steam-hydrocarbon reforming catalyst aggregates may be contained in the bed and/or separate metal oxides of at least one of Cu, Fe and Ni may be contained in the bed as described above in the description of the reactor.

The discussion above relating to the $CO_2$-sorptive aggregates and the steam-hydrocarbon reforming catalyst aggregates applies also to the method.

Typically, the bed is maintained at an elevated temperature, and the reforming reactions may be effected in the range of 350°C to 900°C and more specifically in the range of 600°C to 800°C. The pressure in the reactor may range from 1 to 100 atmospheres (1 to 100 bar). These temperatures and pressures are suitable reaction conditions sufficient to form hydrogen and carbonate from the calcium oxide and/or magnesium oxide-containing aggregates. Preferred reaction conditions for forming hydrogen and reduced calcium oxide and/or magnesium oxide-containing aggregates may be determined without undue experimentation.

The production step comprises introducing steam and a feed gas containing methane into the reactor, reacting the methane with the steam in the bed in the presence of at least one of the reforming catalyst, the metal oxides of at least one of Cu, Fe and Ni, and the at least one metal selected from Ni, Pt, Rh and Pd under reaction conditions sufficient to form hydrogen and to form calcium carbonate and/or magnesium carbonate from $CO_2$-sorptive aggregates, and withdrawing a product gas comprising hydrogen (i.e. the hydrogen-containing gas) from the reactor.

The bed may comprise: (a) $CO_2$-sorptive aggregates comprising a reforming catalyst, (b) a supported or unsupported metal oxide of at least one of Cu, Fe and Ni; and $CO_2$-sorptive aggregates comprising a reforming catalyst, (c) a supported or unsupported metal oxide of at least one of Cu, Fe and Ni; steam-hydrocarbon reforming catalyst aggregates; and $CO_2$-sorptive aggregates comprising a reforming catalyst, (d) steam-hydrocarbon reforming catalyst aggregates and $CO_2$-sorptive aggregates not comprising steam reforming catalyst, and (e) a supported or unsupported metal oxide of at least one of Cu, Fe, and Ni; steam-hydrocarbon reforming catalyst aggregates, and $CO_2$-sorptive aggregates not comprising steam reforming catalyst.

In one or more embodiments, the bed contains the $CO_2$-sorptive aggregates and steam-hydrocarbon reforming catalyst aggregates comprising a reforming catalyst where the $CO_2$-sorptive aggregates include Ni, Pt, Rh or Pd. In these one or more embodiments, the production step comprises introducing steam and a feed gas containing methane into the reactor, reacting the methane and the steam in the bed in the presence of the reforming catalyst under reaction conditions sufficient to form hydrogen and calcium carbonate and/or magnesium carbonate from the $CO_2$-sorptive aggregates, and withdrawing a product gas comprising hydrogen (i.e. the hydrogen-containing gas) from the reactor.

In one or more embodiments, the bed contains the $CO_2$-sorptive aggregates and a metal oxide of at least one of Cu, Fe and Ni where the $CO_2$-sorptive aggregates do not include Ni, Pt, Rh or Pd. In these one or more embodiments, the production step comprises introducing steam and a feed gas containing methane into the reactor, reacting the methane and the steam in the bed in the presence of the metal oxides under reaction conditions sufficient to form hydrogen and calcium carbonate and/or magnesium carbonate from the $CO_2$-sorptive aggregates, and withdrawing a product gas comprising hydrogen (i.e. the hydrogen-containing gas) from the reactor.

In one or more embodiments, the bed contains the $CO_2$-sorptive aggregates where the $CO_2$-sorptive aggregates include at least one metal selected from Ni, Pt, Rh or Pd. In these one or more embodiments, the production step comprises introducing steam and a feed gas containing methane into the reactor, reacting the methane and the steam in the bed in the presence of the at least one metal under reaction conditions sufficient to form hydrogen and calcium carbonate and/or magnesi-

um carbonate from the $CO_2$-sorptive aggregates, and withdrawing a product gas comprising hydrogen (i.e. the hydrogen-containing gas) from the reactor.

Any hydrocarbons may be used which are capable of catalyzed reaction with steam to form hydrogen. The at least one hydrocarbon may be selected from aliphatic hydrocarbons having from 1 to 20 carbon atoms, and advantageously may be selected from aliphatic hydrocarbons having 1 to 6 carbon atoms. Desirably, the feed gas may be selected from methane, natural gas, propane, or a mixture of predominantly $C_1$ to $C_4$ aliphatic hydrocarbons.

The steam and the at least one hydrocarbon may be introduced as a gaseous feed mixture. A desirable gaseous feed mixture comprises steam and methane. The methane in the steam/methane gaseous mixture may be obtained from any suitable source, and may be, for example, natural gas from which sulfur compounds have been removed. It is advantageous to include a low level of hydrogen, e.g. about 3 mole % as a product recycle to an inlet to the reactor in order to assist in the reduction/activation of the catalyst and possibly to reduce the likelihood of carbon deposition, particularly where unreformed natural gas or $C_2$ and higher hydrocarbons are present in the feed.

The molar ratio of steam to carbon typically ranges from 1:1 to 4:1 or from 1.3:1 to 2.5:1. The steam to carbon ratio is a common parameter used in the field of hydrocarbon reforming.

The gaseous feed mixture may be a mixture of adiabatically pre-reformed hydrocarbon feedstock (e.g. natural gas) and steam. The adiabatic pre-reforming process is affected by heating the hydrocarbon feedstock to a temperature of about 500°C and passing the heated gas through an adiabatic nickel catalyst bed. Natural gas typically contains about 5% of heavy hydrocarbon fractions, wherein the term "heavy" is understood to mean fractions containing two or more carbon atoms. The heavy fractions are typically more reactive than methane, and catalytically reform to yield carbon dioxide and hydrogen. The resulting gas mixture therefore contains a mature of methane, carbon dioxide, steam and hydrogen. The pre-reforming reactions typically are endothermic, and because the reaction usually precedes adiabatically, the temperature of the resulting gas mixture decreases. Typically, the temperature of the gas mixture is reduced to about 450°C after pre-reforming.

The use of pre-reformed natural gas instead of untreated natural gas has associated advantages. First, the pre-reforming process generates some hydrogen, which is useful for chemically reducing to an active state the catalyst for the subsequent steam-methane reforming reaction. Second, the removal of the heavy hydrocarbon fractions reduces the potential for carbon deposition on the steam-methane reforming catalyst. The use of pre-reforming extends the life of the catalyst, since carbon deposition ultimately leads to the deactivation of the catalyst.

The regeneration step comprises regenerating the reactor by heating the $CO_2$ saturated $CO_2$ sorptive aggregates under the flow of a purge gas under reaction conditions sufficient to liberate $CO_2$. The purge gas may comprise at least one of nitrogen and steam and may optionally comprise oxygen. The purge gas may be air or steam. The regeneration pressure may be 0.9 to 100 atmospheres (0.9 to 100 bar) or 0.9 to 2 atmospheres (0.9 to 2 bar). The regeneration step may be characterized by a regeneration temperature in the range of 450°C to 900°C.

In another embodiment, the regeneration step comprises regenerating the reactor by heating the $CO_2$ saturated $CO_2$-sorptive aggregates under the flow of a purge gas under reaction conditions sufficient to liberate $CO_2$ and oxidize the reduced metal oxides. The purge gas comprises oxygen and optionally comprises at least one of nitrogen and steam. The regeneration pressure may be 0.9 to 100 atmospheres (0.9 to 100 bar) or 0.9 to 2 atmospheres (0.9 to 2 bar). The regeneration step may be characterized by a regeneration temperature in the range of 450°C to 900°C.

The production step may be characterized by a production temperature and the regeneration step may be characterized by a regeneration temperature, wherein the regeneration temperature may be greater than the production temperature and wherein the difference between the regeneration temperature and the production temperature may be 100°C or less.

The product gas comprising hydrogen may be further processed and purified by pressure swing adsorption or other suitable means if desired.

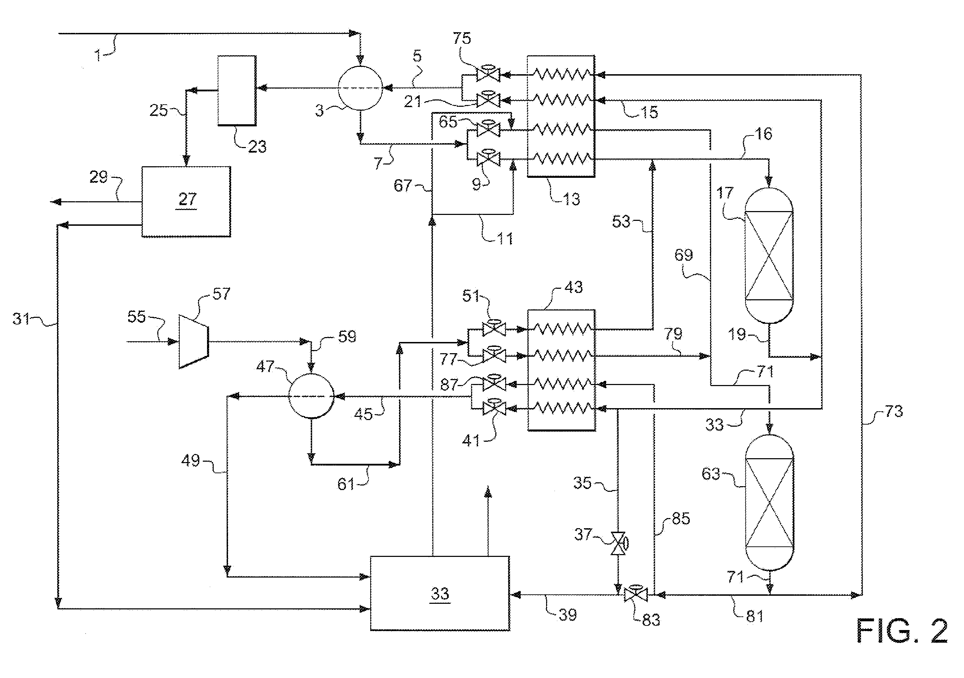

The generation of hydrogen from hydrocarbons and steam using the method, process and reactor may be illustrated by way of exemplary process flowsheet of the FIG. 2.

A hydrocarbon-containing feed gas, for example, methane provided by natural gas, optionally mixed with 1-15 mole% hydrogen, flows via conduit **1** at a pressure in the range of 100 to 600 psia (690 to 4100 kPa) to preheat exchanger **3** and is heated therein to a typical temperature in the range of 200°C to 400°C by heat exchange with a hot process stream (later defined) supplied via conduit **5.** The feed may be desulfurized using metal promoted carbon (not shown) prior to conduit **1,** or using ZnO (not shown) after preheating but prior to conduit **7.** The heated feed flows via conduit 7 and open valve **9** and is mixed with process steam provided via conduit **11** to form a hydrocarbon-steam feed mixture. Alternatively, steam may be added prior to valve **9** if desired (not shown).

The steam-hydrocarbon mixture is introduced into heat exchange zone **13** and is further heated therein by heat exchange with a hot process stream (later defined). The heat exchange zone described here can be a recuperative or a conventional heat exchanger. Heat exchange can take place against any of the hot streams exiting the reactor. The steam-hydrocarbon mixture may be heated to a temperature in the range of 350°C to 900°C, and typically may be in the range of 600°C to 800°C. The heated mixture then is introduced via conduit **16** into reactor **17,** which has a bed packed with $CO_2$ sorptive-containing pellets and optionally steam-hydrocarbon reforming catalyst as discussed for the method, process and reactor. Alternatively, the heat exchange zone can be a portion of the reactor itself, at either or both of its ends, and conduits may not be necessary. The reactor **17** itself may be substantially adiabatic and insulated, preferably by an internal lining of refractory material (s). The feed mixture reacts in the bed to form primarily hydrogen and carbon dioxide, and, in much smaller amounts, carbon monoxide. The carbon dioxide is substantially retained by reaction with the $CO_2$ sorptive pellets in the bed.

The reaction product effluent stream flows via conduit **15** to heat exchange zone **13**, where it is cooled to a temperature in the range of 250°C to 500°C by heat exchange with incoming reactants as earlier described, or regenerate as described below. The cooled reaction product effluent stream exits heat exchange zone **13** via open valve **21** and is further cooled in heat exchange zone **3** and optionally boiler **23** to yield a further cooled reaction product effluent stream in conduit **25** at a typical temperature of 40°C. Any condensate is knocked out at this point (not shown).

The cooled reaction product stream containing hydrogen, small amounts of carbon dioxide, carbon monoxide and unreacted methane is introduced into pressure swing adsorption (PSA) system **27** and is separated therein to yield a high-purity hydrogen product containing at least 99 vol. % hydrogen that is withdrawn via conduit **29**. Components removed from the hydrogen by the PSA system typically include carbon dioxide, water, methane and carbon monoxide, and these are withdrawn in a waste gas via conduit **31** during the blowdown and purge steps typically used in PSA process cycles. Any PSA cycle and system known in the art may be used in the process described in this and other embodiments of the invention. The waste gas in conduit **31** typically contains combustible components and may be used as fuel in a fired boiler, **33,** or in a direct fired heater to preheat regenerant air (not shown).

The mixture of $CO_2$ sorptive pellets and steam-hydrocarbon reforming catalyst in reactor **17** has a finite capacity for carbon dioxide. Once this is exhausted, the purity and yield of hydrogen in the reaction product effluent stream leaving reactor **17** via conduit **19** will begin to decrease. The time at which this occurs can be determined by real-time analysis of the stream by any known analytical means, such as, for example, in-line IR spectroscopy. At this point, reactor **17** is switched to regeneration mode by closing valve **9** and depressurizing the reactor via conduits **19,** conduit **32,** conduit **35,** open valve **37,** and conduit **39,** wherein the hydrocarbon-containing blowdown gas is introduced into boiler **33** or a direct fired air heater (not shown). At this point, valve **41** remains closed. The blowdown can be cocurrent or countercurrent. In case the blowdown is countercurrent, the piping would need to be modified accordingly.

Valve **37** is then closed, valve **41** is then opened and reactor **17** may be purged with a suitable purge gas such as steam or nitrogen to remove residual hydrocarbons from the reactor void volume. In this embodiment, steam for purge is provided via conduit **11** and flows through heat exchanger **13** and conduit **16** into the reactor. Purge effluent gas leaves the reactor via conduits **19** and **32**, flows through heat exchanger **43**, open valve **41**, conduit **45**, heat exchanger **47**, and conduit **49** into boiler **33**. The purge may be cocurrent or countercurrent with appropriate modifications to the flowsheet, easily recognized by one skilled in the art.

A particular feature of this embodiment is that the switching valves such as valve **9** or **51** are on the cooler side of the heat exchange zones **13** or **43**. While this requires each reactor to be associated with its individual heat exchange zone, it does ease the mechanical requirements and operating life of the switching valves. It is possible to combine heat exchange zones **13** and **43** into a single heat exchanger (not shown here), but that would require the valves to be repositioned to the hotter side of the heat exchange zone.

The figure shows the heat exchange zones to be of the conventional type where heat exchange between streams is contemporaneous. The heat exchange zones could also be recuperative in nature (not shown), where heat from a cooling stream is stored in the heat capacitance of the zone, and released to a warming stream in a subsequent step. The zones would comprise of inert solids such as ceramic pellets or firebrick. They could be located in a separate vessel, or form a portion of the reactor vessel itself at either or both ends, adjacent to the reaction zone which is the active zone filled with $CO_2$ sorptive pellets and reforming catalyst.

Regeneration of reactor **17** then is initiated by opening previously-closed valve **51**. A regeneration gas selected from air, steam, nitrogen or a mixture thereof is provided via intake conduit **55** to compressor **57** and is compressed therein to 15 to 100 psia (690 kPa) and the compressed regeneration gas in conduit **59** is preheated in heat exchanger **47** to 250°C to 500°C, and introduced via conduit **61** and valve **51** into the heat exchange zone **43**. The regeneration gas is further heated in heat exchange zone **43** against hot exhaust gas from conduit **32** (later described), or hot reactor effluent as described earlier, to a temperature between 500°C and 900°C, typically from 700°C to 800°C. The heated regenerated gas flows via conduits **53** and **16** into reactor **17**, and the heated regeneration gas regenerates $CO_2$ sorptive pellet by releasing the carbon dioxide previously reacted with the $CO_2$ sorptive pellet material. The carbon dioxide-rich regeneration off-gas leaves the reactor via conduit **19** and conduit **32** at a temperature in the range of 600°C to 900°C and typically from 650°C to 800°C. The hot regeneration off-gas in conduit **32** is introduced into heat exchange zone **43** (this may be integrated with heat exchange zone **13**) to heat the regeneration gas entering via valve **51** as earlier described, or to heat the hydrocarbon-steam feed mixture as earlier described, whereby the off-gas is cooled to a temperature in the range of 350°C to 600°C. The cooled regeneration off-gas flows via valve **41** and is further cooled to a temperature in the range of 200°C to 30°C in heat exchanger **47,** thereby heating compressed air stream **59** as earlier described. The cooled regeneration off-gas stream in conduit **49** may be introduced into boiler **33** for additional heat recovery.

Following the substantial regeneration of reactor **17** by removal of most or all of the carbon dioxide retained therein during the reaction step, the reactor may be purged with an inert gas and repressurized with steam, feed gas, or product gas. Following repressurization, the reactor proceeds to the reaction step and the cycle is repeated as described earlier.

Reactor **63** is operated through the same cycle steps described above for reactor **17,** but the cycle of reactor **63** is staggered so that it operates in the regeneration mode when reactor **17** operates in the reaction or hydrogen production mode. Hydrocarbon-containing feed gas flows via valve **65,** steam is added via conduit **67,** the feed-steam mixture is heated in heat exchanger **13,** and the heated feed flows via conduits **69** and **71** to reactor **63**. Reaction product gas leaves the reactor via conduits **72** and **73,** is cooled in heat exchanger **13,** and flows via valve **75,** conduit **5,** heat exchanger **3,** boiler **23,** and conduit **25** to PSA system **27**. Regeneration gas is provided to reactor **63** via valve **77,** heat exchanger **43,** and conduit **71,** and blowdown or depressurization gas exits via conduit **81,** valve **83,** and conduit **39** into boiler **33**. Regeneration off-gas leaves reactor **63** via conduit **85,** heat exchanger **43,** and valve **87,** and then flows via conduit **45,** heat exchanger **47,** and conduit **49** to boiler **33**.

Reactors **17** and **63** thus are operated in a staggered sequence between the hydrogen production and regeneration modes by the proper operation of switch valves **9, 21, 37, 41, 51, 65, 75, 77, 83,** and **87** as described above. Operation with two parallel reactors with constant hydrogen product flow is possible when the elapsed time of the hydrogen production mode is equal to or greater than that of the regeneration mode. However, any suitable number of reactors in parallel may be used in staggered operation to achieve continuous hydrogen production. In practice, the duration of the hydrogen production step may be different than the duration of the regeneration step. For example, if the regeneration step is twice as long as the production step, a configuration employing three parallel beds may be advantageously used wherein two beds are being regenerated while the third bed is used for hydrogen production.

Examples

Several batches of pellets were made from calcium oxide, calcium carbonate, and a mixture of calcium oxide and calcium carbonate using a wide variety of techniques described below in the examples. The strength these particulate were determined by crushing them and determining the force per unit length required to crush the pellet. The diameter of pellet was determined by measuring it by a caliper.

The $CO_2$ sorption/desorption performance of calcium oxide-containing pellets was determined by using a thermogravimetric analyzer (TGA). A sample was placed in the TGA apparatus and heated to 700°C or 750°C while purging with an inert nitrogen gas stream. The sample was then exposed to a humidified gas containing $CO_2$ for 15 min to chemically sorb carbon dioxide from the gas mixture, thereby forming $CaCO_3$. The gain in weight due to sorption of $CO_2$ by calcium oxide pellets was recorded by the TGA instrument. The calcium oxide pellets saturated with $CO_2$ and heated to 700°C or 750°C was regenerated by exposing it to air for 15 minutes. The exposure to air decomposed $CaCO_3$ and reproduced calcium oxide. The weight loss due to $CO_2$ removal from the calcium oxide pellets was recorded again by the TGA instrument. The cycling between exposing calcium oxide pellets to a gas containing $CO_2$ and air was repeated for a specified number of cycles as detailed in each example.

Example 1

In example 1, CaO-calcium aluminate pellets were prepared according to conventional techniques. A mixture was prepared by mixing 69.7g of calcium oxide (prepared by decomposing calcium carbonate at 900°C), 40g of alumina in the form of boehmite (75% pure alumina), and 2g methocel as a pore former. The amount of CaO and alumina in the mixture was sufficient to (a) stoichiometrically produce a nominal composition of 3CaO.$2Al_2O_3$ and (b) provide sufficient amount of CaO to produce CaO-calcium aluminate containing 45 wt% of free CaO. The particle size of CaO and alumina powders was about 10 microns. Approximately 82g of deionized water was added to the mixture to prepare a paste. The paste was then used to prepare 1/16 inch (0.16 cm) diameter green pellets by extruding in a lab-scale extruder. The green pellets were dried at 120°C. They were heated at 2°C/minute from room temperature to 600°C in a furnace in air. The calcination temperature was maintained at 600°C for 30 minutes to consolidate the structure of the green pellets. The pellets were then heated at 0.5°C/minute from 600°C to 700°C. The pellets were maintained at 700°C for 30 minutes to further consolidate the structure of the pellets. The pellets were then heated at a heating rate of 0.5°C/minute from 700°C to 1000°C. The pellets were maintained at 1000°C for 2 hours to form calcium aluminate in-situ. The calcined pellets were then cooled to room temperature to form the pellets in final form.
XRD analysis of the fresh pellets identified CaO as the major phase, $Ca_3Al_2O_6$ as a low major phase and a trace of $Ca_{12}Al_{14}O_{33}$.
The median pore diameter and porosity was measured by mercury porosimetry. The median pore diameter for a representative sample was 1049 angstroms (104.9 nm) and the porosity was 40.8 %.
The pellets were tested by exposing them to 50 cycles of the $CO_2$ sorption/desorption cycle test in the TGA using a humidified atmosphere described above for the $CO_2$ sorption/desorption cycle test. Both the sorption and desorption was carried out at 750°C. These pellets showed an initial $CO_2$ sorption capacity of 15 mass %. The $CO_2$ sorption capacity of the pellets decreased continuously with the number of cycles. The $CO_2$ sorption capacity of pellets after 50 cycles was 8 mass%. The diameter of pellets did not change after 50 sorption and desorption cycles. Furthermore, the crush strength (defined as the force needed crush a pellet on its side divided by its length) of the pellets increased from 3.5 Ibf/mm (15.6 N/mm) initially to 4.9 Ibf/mm (21.8 N/mm) after 50 cycles.
The pellets made according to example 1 exhibited strength and dimensionally stability. However, the $CO_2$ sorption capacity decreased after only 50 sorption/desorption cycles.

Example 2

In example 2, CaO-calcium aluminate pellets were prepared according to conventional techniques. A mixture was prepared by mixing 67.5g of calcium oxide (prepared by decomposing calcium carbonate at 900°C), 25g of alumina in the form of boehmite (75% pure alumina), and 2g methocel as a pore former. The amount of CaO and alumina in the mixture was sufficient to (a) stoichiometrically produce a nominal composition of 3CaO.$2Al_2O_3$ and (b) provide sufficient amount of CaO to produce CaO-calcium aluminate containing 60 wt% of free CaO. The particle size of CaO and alumina powders was about 10 microns. Approximately 81 g of deionized water was added to the mixture to prepare a paste. The paste was then used to prepare 1/16 inch (0.16 cm) diameter green pellets by extruding in a lab-scale extruder. The green pellets were dried at 120°C. They were heated at 2°C/minute from room temperature to 600°C in a furnace in air. The calcination temperature was maintained at 600°C for 30 minutes to consolidate the structure of the green pellets. The pellets were then heated at 0.5°C/minute from 600°C to 700°C. The pellets were maintained at 700°C for 30 minutes to further consolidate the structure of the pellets. The pellets were then heated at a heating rate of 0.5°C/minute from 700°C to 1000°C. The pellets were maintained at 1000°C for 2 hours to form calcium aluminate in-situ. The calcined pellets were then cooled to room temperature to form the pellets in final form.

XRD analysis of the fresh pellets identified CaO and $Ca_3Al_2O_6$ as major phases with $Ca_{12}Al_{14}O_{33}$ as a low minor phase.

The median pore diameter and porosity was measured by mercury porosimetry. The median pore diameter for a representative sample was 930 angstroms (93 nm) and the porosity was 47.1 %.

The pellets were tested by exposing them to 50 cycles of $CO_2$ sorption/desorption in the TGA using a humidified atmosphere described above. Both the sorption and desorption were carried out at 750°C. These pellets showed an initial $CO_2$ sorption capacity of 23 mass %. The $CO_2$ sorption capacity of the pellets decreased continuously with the number of cycles. The $CO_2$ sorption capacity of pellets after 50 cycles was 13 mass%

Example 3

In example 3, CaO-calcium aluminate pellets were prepared in accordance with the present invention. A mixture was prepared by mixing 77.5g of calcium carbonate, 23.8g of CaO (prepared by decomposing calcium carbonate at 900°C), and 40g of alumina in the form of boehmite (75% pure alumina). The amount of CaO and alumina in the mixture was sufficient to stoichiometrically produce a nominal composition of $3CaO.2Al_2O_3$. In addition, the amount of calcium carbonate, CaO, and alumina in the mixture was sufficient to produce CaO-calcium aluminate containing 44 wt% of free CaO. The particle size of calcium carbonate, CaO and alumina powders was about 10 microns. Approximately 58g of deionized water was added to the mixture to prepare a paste. The paste was then used to prepare 1/16 inch (0.16 cm) diameter green pellets by extruding in a lab-scale extruder. The green pellets were dried at 120°C. The pellets were heated at 2°C/minute from room temperature to 600°C in a furnace in air. The calcination temperature was maintained at 600°C for 30 minutes to consolidate the structure of the green pellets. The pellets were then heated at 0.5°C/minute from 600°C to 700°C. The pellets were maintained at 700°C for 30 minutes to further consolidate the structure of the pellets. The pellets were then heated at a heating rate of 0.5°C/minute from 700°C to 1000°C. The pellets were maintained at 1000°C for 2 hours to form calcium aluminate in-situ. The calcined pellets were then cooled to room temperature to form the pellets in final form.

XRD Analysis of the fresh sample identified a phase mixture of CaO, $Ca_2Al_2O_5$, $Ca_3Al_2O_6$, $CaAl_2O_4$, and $Ca_{12}Al_{14}O_{33}$.

The median pore diameter and porosity was measured by mercury porosimetry. The median pore diameter for a representative sample was 9973 angstroms (997.3 nm) and the porosity was 49.4 %.

The pellets made in example 3 were tested in a variety of ways.

The pellets were tested by exposing them to 50 cycles of $CO_2$ sorption/desorption in the TGA using a humidified atmosphere described above. Both the sorption and desorption were carried out at 750°C. These pellets showed an initial $CO_2$ sorption capacity of 23 mass %. The $CO_2$ sorption capacity of the pellets did not change even after 50 cycles. The diameter of pellets did not change after 50 sorption and desorption cycles. Furthermore, the crush strength of the pellets increased from 1.9 lbf/mm (8.4 N/mm) to 2.5 lbf/mm (11.1 N/mm) after 50 cycles.

The pellets were also tested by exposing them to 200 cycles of $CO_2$ sorption/desorption in the TGA using a humidified atmosphere as described above. Both the sorption and desorption were carried out at 750°C. These pellets showed an initial $CO_2$ sorption capacity of 27 mass %. The $CO_2$ sorption capacity of the pellets did not change even after 200 cycles. The diameter of pellets did not change after 200 sorption and desorption cycles. Furthermore, the crush strength of the pellets increased to 2.4 lbf/mm (10.7 N/mm) after 200 cycles.

The pellets were also tested for 50 cycles of $CO_2$ sorption/desorption in a tubular reactor. The $CO_2$ sorption was carried out using a mixture containing 50% $CO_2$ and 50% steam. The $CO_2$ desorption was carried out by using 50% air and 50% steam. Both sorption and desorption were carried out at 750°C. After completing 50 sorption and desorption cycles in the tubular reactor, the pellets were removed from the tubular reactor. There was no change in the diameter of the pellets.

The pellets that were tested in the tubular reactor were tested again by exposing them to 50 cycles of the $CO_2$ sorption/desorption in the TGA using a humidified atmosphere described above. Both the sorption and desorption were carried out at 750°C. These pellets showed an initial $CO_2$ sorption capacity of 27 mass %. The $CO_2$ sorption capacity of the pellets did not change even after 50 cycles in TGA. The diameter of pellets did not change after 50 sorption and desorption cycles in TGA. The final crush strength of the pellets after 50 cycles in the tubular reactor and 50 cycles in the TGA was 3.4 lbf/mm (15.1 N/mm).

Other pellets were tested for 50 cycles of $CO_2$ sorption/desorption in a tubular reactor for the $CO_2$ sorption/desorption cycle test. The $CO_2$ sorption was carried out using a mixture containing 50% $CO_2$ and 50% steam. The $CO_2$ desorption was carried out by using a mixture containing 50% air and 50% steam. Both sorption and desorption was carried out at 750°C. After completing 50 sorption and sorption cycles in the tubular reactor, the pellets were removed from the tubular reactor. There was no change in the diameter of the pellets.

The pellets that were tested in the tubular reactor were further tested by exposing them to 200 cycles of $CO_2$ sorption/desorption in the TGA using a humidified atmosphere described above. Both the sorption and desorption were carried out at 750°C. These pellets showed a $CO_2$ sorption capacity of 24 mass % after 200 cycles. The diameter of pellets did not change after 50 sorption and desorption cycles in TGA. The final crush strength of the pellets after 50 cycles in the tubular reactor and 200 cycles in the TGA was 3.2 Ibf/mm (14.2 N/mm).

This example demonstrates that the pellets described herein are strong and dimensionally stable and retain their $CO_2$ sorption capacity. These pellets can be made by the present method.

Example 4

In example 4, CaO-calcium aluminate pellets were made according to the present method. A mixture was prepared by mixing 90g of calcium carbonate, 15.1 g of CaO (prepared by decomposing calcium carbonate at 900°C), 25g of alumina in the form of boehmite (75% pure alumina), and 2g methocel as a pore former. The amount of CaO and alumina in the mixture was sufficient to stoichiometrically produce a nominal composition of $3CaO.2Al_2O_3$. In addition, the amount of calcium carbonate, CaO, and alumina in the mixture was sufficient to produce CaO-calcium aluminate containing 59 wt% free CaO. The particle size of calcium carbonate, CaO and alumina powders was about 10 microns. Approximately 52g of deionized water was added to the mixture to prepare a paste. The paste was then used to prepare 1/16 inch (0.16 cm) diameter green pellets by extruding in a lab-scale extruder. The green pellets were dried at 120°C. They were heated at 2°C/minute from room temperature to 600°C in a furnace in air. The calcination temperature was maintained at 600°C for 30 minutes to consolidate the structure of the green pellets. The pellets were then heated at 0.5°C/minute from 600°C to 700°C. The pellets were maintained at 700°C for 30 minutes to further consolidate the structure of the pellets. The pellets were then heated at a heating rate of 0.5°C/minute from 700°C to 1000°C. The pellets were maintained at 1000°C for 2 hours to form calcium aluminate in-situ. The calcined pellets were then cooled to room temperature to form the pellets in final form.

XRD analysis of the fresh sample identified the major phase was very strong CaO with minor $Ca_3Al_2O_6$ and low minor $Ca_{12}Al_{14}O_{33}$ and $CaAl_2O_4$.

The median pore diameter and porosity was measured by mercury porosimetry. The median pore diameter for a representative sample was 15922 angstroms (1592.2 nm) and the porosity was 64 %.

The pellets were tested by exposing them to 50 cycles of $CO_2$ sorption/desorption in the TGA using a humidified atmosphere described above. Both the sorption and desorption were carried out at 750°C. These pellets showed an initial $CO_2$ sorption capacity of 30 mass %. The $CO_2$ sorption capacity of the pellets did not change even after 50 cycles. The diameter of pellets did not change after 50 sorption and desorption cycles. The crush strength of the pellets increased from 1.8 Ibf/mm (8.0 N/mm) to 2.2 Ibf/mm (9.8 N/mm) after 50 cycles.

This example demonstrates that the pellets described herein are strong and dimensionally stable and retain their $CO_2$ sorption capacity. These pellets can be made by the present method.

Example 5

In example 5, CaO-calcium aluminate pellets were prepared according to the present method. A mixture was prepared by mixing 100g of calcium carbonate, 10.3g of CaO (prepared by decomposing calcium carbonate at 900°C), 17.2g of alumina in the form of boehmite (75% pure alumina), and 2g methocel as a pore former. The amount of CaO and alumina in the mixture was sufficient to stoichiometrically produce a nominal composition of $3CaO.2Al_2O_3$. In addition, the amount of calcium carbonate, CaO, and alumina in the mixture was sufficient to produce CaO-calcium aluminate containing 76 wt% free CaO. The particle size of calcium carbonate, CaO and alumina powders was about 10 microns. Approximately 48g of deionized water was added to the mixture to prepare a paste. The paste was then used to prepare 1/16 inch (0.16 cm) diameter green pellets by extruding in a lab-scale extruder. The green pellets were dried at 120°C. They were heated at 2°C/minute from room temperature to 600°C in a furnace in air. The calcination temperature was maintained at 600°C for 30 minutes to consolidate the structure of the green pellets. The pellets were then heated at 0.5°C/minute from 600°C to 700°C. The pellets were maintained at 700°C for 30 minutes to further consolidate the structure of the pellets. The pellets were then heated at a heating rate of 0.5°C/ minute from 700°C to 1000°C. The pellets were maintained at 1000°C for 2 hours to form calcium aluminate in-situ. The calcined pellets were then cooled down to room temperature to form the pellets in final form.

XRD analysis of the fresh sample identified - the major phase was very strong CaO, with minor $Ca_3Al_2O_6$ and $CaAl_2O_4$, and weak $Ca_2Al_2O_5$.

The median pore diameter and porosity was measured by mercury porosimetry. The median pore diameter for a representative sample was 31891 angstroms (3189.1 nm) and the porosity was 67.6 %.

The pellets were tested by exposing them to 50 cycles of the $CO_2$ sorption/desorption in the TGA using a humidified atmosphere described above. Both the sorption and desorption were carried out at 750°C. These pellets showed an initial $CO_2$ sorption capacity of 38 mass %. The $CO_2$ sorption capacity of the pellets did not change even after 50 cycles. The diameter of pellets did not change after 50 sorption and desorption cycles. Furthermore, the crush strength of the pellets increased from 1.1 Ibf/mm (4.9 N/mm) to 3.1Ibf/mm (13.8 N/mm) after 50 cycles.

This example demonstrates that the pellets described herein are strong and dimensionally stable and retain their $CO_2$ sorption capacity. These pellets can be made by the present method.

Example 6

In example 6, CaO-calcium aluminate pellets were prepared according to the present method. A mixture was prepared by mixing 100g of calcium carbonate, 15.2g of alumina in the form of boehmite (75% pure alumina), and 2g methocel as a pore former. The amount of $CaCO_3$ and alumina in the mixture was sufficient to (a) stoichiometrically produce a nominal composition of $3CaO.2Al_2O_3$ and (b) provide sufficient amount of CaO to produce CaO-calcium aluminate containing 69 wt% free CaO. The particle size of calcium carbonate and alumina powders was about 10 microns. Approximately 49g of deionized water was added to the mixture to prepare a paste. The paste was then used to prepare 1/16 inch (0.16 cm) diameter green pellets by extruding in a lab-scale extruder. The green pellets were dried at 120°C. They were heated at 2°C/minute from room temperature to 600°C in a furnace in air. The calcination temperature was maintained at 600°C for 30 minutes to consolidate the structure of the green pellets. The pellets were then heated at 0.5°C/minute from 600°C to 700°C. The pellets were maintained at 700°C for 30 minutes to further consolidate the structure of the pellets. The pellets were then heated at a heating rate of 0.5°C/minute from 700°C to 1000°C. The pellets were maintained at 1000°C for 2 hours to form calcium aluminate in-situ. The calcined pellets were then cooled down to room temperature to form the pellets in final form.

XRD analysis of the fresh pellets identified CaO as the major phase with $Ca_3Al_2O_6$ and $CaAl_2O_4$ as minor phases.

The median pore diameter and porosity was measured by mercury porosimetry. The median pore diameter for a representative sample was 36427 angstroms (3642.7 nm) and the porosity was 72 %.

The pellets were tested by exposing them to 50 cycles of the $CO_2$ sorption/desorption n the TGA using a humidified atmosphere described above. Both the sorption and desorption were carried out at 750°C. These pellets showed an initial $CO_2$ sorption capacity of 36 mass %. The $CO_2$ sorption capacity of the pellets did not change even after 50 cycles. The diameter of pellets did not change after 50 sorption and desorption cycles. Furthermore, the crush strength of the pellets increased from 1.5 lbf/mm (6.7 N/mm) to 3.3lbf/mm (14.7 N/mm) after 50 cycles.

This example demonstrates that the pellets described herein are strong and dimensionally stable and retain their $CO_2$ sorption capacity. These pellets can be made by the present method.

Example 7

In example 7, CaO-calcium aluminate pellets were prepared according to the present method. A mixture was prepared by mixing 100g of calcium carbonate, 22.9g of alumina in the form of boehmite (75% pure alumina), and 2g methocel as a pore former. The amount of $CaCO_3$ and alumina in the mixture was sufficient to (a) stoichiometrically produce a nominal composition of $3CaO.2Al_2O_3$ and (b) provide sufficient amount of CaO to produce CaO-calcium aluminate containing 57 wt% free CaO. The particle size of calcium carbonate and alumina powders was about 10 microns. Approximately 49g of deionized water was added to the mixture to prepare a paste. The paste was then used to prepare 1/16 inch (0.16 cm) diameter green pellets by extruding in a lab-scale extruder. The green pellets were dried at 120°C. They were heated at 2°C/minute from room temperature to 600°C in a furnace in air. The calcination temperature was maintained at 600°C for 30 minutes to consolidate the structure of the green pellets. The pellets were then heated at 0.5°C/minute from 600°C to 700°C. The pellets were maintained at 700°C for 30 minutes to further consolidate the structure of the pellets. The pellets were then heated at a heating rate of 0.5°C/minute from 700°C to 1000°C. The pellets were maintained at 1000°C for 2 hours to form calcium aluminate in-situ. The calcined pellets were then cooled down to room temperature to form the pellets in final form.

XRD analysis of the fresh pellets identified CaO as the major phase with $Ca_3Al_2O_6$ and $CaAl_2O_4$ as minor phases.

The median pore diameter and porosity was measured by mercury porosimetry. The median pore diameter for a representative sample was 19868 angstroms (1986.8 nm) and the porosity was 66.7 %.

The pellets were tested by exposing them to 50 cycles of the $CO_2$ sorption/desorption in the TGA using a humidified atmosphere described above. Both the sorption and desorption were carried out at 750°C. These pellets showed an initial $CO_2$ sorption capacity of 30 mass %. The $CO_2$ sorption capacity of the pellets did not change even after 50 cycles. The diameter of pellets did not change after 50 sorption and desorption cycles. Furthermore, the crush strength of the pellets increased from 1.5 lbf/mm (6.7 N/mm) to 3.3 lbf/mm (14.7 N/mm) after 50 cycles.

This example demonstrates that the pellets described herein are strong and dimensionally stable and retain their $CO_2$ sorption capacity. These pellets can be made by the present method.

Example 8

In example 8, CaO-calcium titanate pellets were prepared according to the present invention. A mixture was prepared by mixing 90g of calcium carbonate, 23.6g of CaO (prepared by decomposing calcium carbonate at 900°C), and 60g of titanium dioxide. The amount of CaO and titanium dioxide in the mixture was sufficient to stoichiometrically produce $CaTiO_3$. In addition, the amount of calcium carbonate, CaO, and alumina in the mixture was sufficient to produce CaO-calcium titanate containing 38 wt% free CaO. The particle size of calcium carbonate, CaO and titanium dioxide powders was about 10 microns. Close to 48g of deionized water was added to the mixture to prepare a paste. The paste was then used to prepare 1/16 inch (0.16 cm) diameter green pellets by extruding in a lab-scale extruder. The green pellets were dried at 120°C. They were heated at 2°C/minute from room temperature to 600°C in a furnace in air. The calcination temperature was maintained at 600°C for 30 minutes to consolidate the structure of the green pellets. The pellets were then heated at 0.5°C/minute from 600°C to 700°C. The pellets were maintained at 700°C for 30 minutes to further consolidate the structure of the pellets. The pellets were then heated at a heating rate of 0.5°C/minute from 700°C to 1000°C. The pellets were maintained at 1000°C for 2 hours to form calcium titanate in-situ. The calcined pellets were then cooled to room temperature to form the pellets in final form.

XRD analysis of the fresh sample identified a phase mixture of $CaTiO_3$, CaO, and minor amount of $TiO_2$.

The median pore diameter and porosity was measured by mercury porosimetry. The median pore diameter for a representative sample was 15235 angstroms (1523.5 nm) and the porosity was 69.8 %.

The pellets were tested by exposing them to 50 cycles of the $CO_2$ sorption/desorption in the TGA using a humidified atmosphere described above. Both the sorption and desorption were carried out at 750°C. These pellets showed an initial $CO_2$ sorption capacity of 32 wt %. The $CO_2$ sorption capacity of the pellets did not change even after 50 cycles. The diameter of pellets did not change after 50 sorption and desorption cycles. Furthermore, the crush strength of the pellets increased from 1.2 lbf/mm (5.3 N/mm) to 1.8 lbf/mm (8.0 N/mm) after 50 cycles.

This example demonstrates that the pellets described herein are strong and dimensionally stable and retain their $CO_2$ sorption capacity. These pellets can be made by the present method.

Example 9

In example 9, CaO-calcium titanate pellets were prepared according to the present invention. A mixture was prepared by mixing 90g of calcium carbonate, 12.4g of CaO (prepared by decomposing calcium carbonate at 900°C), 16.3g of titanium dioxide, and 2g of methocel as a pore former. The amount of CaO and titanium dioxide in the mixture was sufficient to stoichiometrically produce $CaTiO_3$. In addition, the amount of calcium carbonate, CaO, and alumina in the mixture was sufficient to produce CaO-calcium titanate containing 64 wt% free CaO. The particle size of calcium carbonate, CaO and titanium dioxide powders was about 10 microns. Approximately 36g of deionized water was added to the mixture to prepare a paste. The paste was then used to prepare 1/16 inch (0.16 cm) diameter green pellets by extruding in a lab-scale extruder. The green pellets were dried at 120°C. They were heated at 2°C/minute from room temperature to 600°C in a furnace in air. The calcination temperature was maintained at 600°C for 30 minutes to consolidate the structure of the green pellets. The pellets were then heated at 0.5°C/minute from 600°C to 700°C. The green pellets were maintained at 700°C for 30 minutes to further consolidate the structure of the pellets. The green pellets were then heated at a heating rate of 0.5°C/minute from 700°C to 1000°C. The pellets were maintained at 1000°C for 2 hours to form calcium titanate in-situ. The calcined pellets were then cooled to room temperature to form the pellets in final form.

The median pore diameter and porosity was measured by mercury porosimetry. The median pore diameter for a representative sample was 13646 angstroms (1364.6 nm) and the porosity was 69.8 %.

The pellets were tested by exposing them to 50 cycles of $CO_2$ sorption/desorption in the TGA using a humidified atmosphere described above. Both the sorption and desorption were carried out at 750°C. These pellets showed an initial $CO_2$ sorption capacity of 38 mass % with a $CO_2$ sorption capacity of 21 mass % after 50 cycles. The diameter of pellets did not change after 50 sorption and desorption cycles. Furthermore, the crush strength of the pellets increased from 1.6 lb/mm (7.1 N/mm) to 2.2 lb/mm (9.8 N/mm) after 50 cycles.

This example demonstrates that the pellets described herein are strong and dimensionally stable. These pellets can be made by the present method.

This example illustrates that strong and dimensionally stable CaO-calcium titanate pellets can be prepared by the method described above. While the $CO_2$ sorption capacity decreased after 50 cycles of $CO_2$ sorption/desorption, the final $CO_2$ sorption capacity is still much greater than that of Example 1 and Example 2, which were pellets not made by the present method.

The above described specific embodiments and examples are merely illustrative of the invention, which is not limited thereto.

**Claims**

1. An aggregate suitable for carbon dioxide sorption comprising:

   25 to 85 mass % of at least one binding agent selected from calcium titanate, calcium aluminate, calcium zirconate, magnesium titanate, magnesium aluminate, and magnesium zirconate; and
   15 to 75 mass % of calcium oxide, magnesium oxide or mixture of calcium oxide and magnesium oxide;
   wherein the aggregate is a pellet or a granule having a median pore diameter in a range of 500 nm to 5000 nm and a porosity in a range of 45 % to 80 %.

2. The aggregate of claim 1 further comprising:
0.1 to 10 mass % of at least one metal selected from Ni, Pt, Rh, and Pd.

3. The aggregate of claim 1 or claim 2 wherein the aggregate is a pellet and has a characteristic length of 0.1 mm to 3 mm.

4. The aggregate of any one of claims 1 to 3 wherein the aggregate is a pellet and has a crush strength of 4 to 67 N/mm (1 to 15 lbf/mm) as determined in accordance with ASTM standard test method D 6175-03.

5. The aggregate of any one of claims 1 to 4 wherein the aggregate is a pellet and has a structure wherein the crush strength of the pellet is retained within 4 to 67 N/mm (1 to 15 lbf/mm) after 50 cycles of $CO_2$ sorption and $CO_2$ desorption wherein the $CO_2$ sorption is by exposing the pellet to a humidified $CO_2$-containing gas comprising 97 to 98 vol. % $CO_2$ and 2 to 3 vol. % $H_2O$ at 750°C and $CO_2$ desorption is by exposing the pellet to humidified air at 750°C.

6. The aggregate of claim 1 or claim 2 wherein the aggregate is a granule and has a characteristic length of 50 microns to 3 mm.

7. The aggregate of any one of claims 1, 2, or 6 wherein the aggregate is a granule and has a structure wherein the granule retains its shape and size after 50 cycles of $CO_2$ sorption and $CO_2$ desorption wherein the $CO_2$ sorption is by exposing the granule to a humidified $CO_2$-containing gas comprising 97 to 98 vol. % $CO_2$ and 2 to 3 vol. % $H_2O$ at 750°C and $CO_2$ desorption is by exposing the granule to humidified air at 750°C.

8. A method for making an aggregate suitable for carbon dioxide sorption, the method comprising the steps of:

　　(a) preparing a mixture, the mixture comprising:

　　　at least one of calcium carbonate and magnesium carbonate in an amount to provide the 15 to 75 mass % of calcium oxide, magnesium oxide or mixture of calcium oxide and magnesium oxide in the aggregate;
　　　at least one of a calcium precursor and a magnesium precursor in an amount to provide the 25 to 85 mass % of the at least one binding agent in the aggregate;
　　　at least one of $TiO_2$, $Al_2O_3$, $ZrO_2$, $Al(OH)_3$ and AlO(OH) in an amount to provide the 25 to 85 mass % of the at least one binding agent in the aggregate; and
20 to 80 mass % water;

　　(b) forming a green aggregate from the mixture;
　　(c) heating the green aggregate from a first temperature to a second temperature at a first average heating rate of 0.1°C/minute to 10°C/minute,
　　wherein the first temperature is within a first temperature range wherein the first temperature range is between 5°C and 50°C, and
　　wherein the second temperature is a minimum temperature of a second temperature range, the second temperature range extending from the minimum temperature of the second temperature range to a maximum temperature of the second temperature range wherein the minimum temperature of the second temperature range is 600°C and the maximum temperature of the second temperature range is 750°C;
　　(d) maintaining the green aggregate within the second temperature range for a first time period of between 15 minutes and 4 hours;
　　(e) heating the green aggregate from the maximum temperature of the second temperature range to a third temperature at a second average rate of 0.1°C/minute to 10°C/minute,
　　wherein the third temperature is a minimum temperature of a third temperature range, the third temperature range extending from the minimum temperature of the third temperature range to a maximum temperature of the third temperature range wherein the minimum temperature of the third temperature range is 900°C and the maximum temperature of the third temperature range is 1050°C;
　　(f) maintaining the green aggregate within the third temperature range for a second time period of between 15 minutes and 4 hours; and
　　(g) cooling the green aggregate to a fourth temperature, wherein the fourth temperature is within a fourth temperature range wherein the fourth temperature range is between 0°C and 50°C, to make the aggregate;
　　wherein the green aggregate is exposed to an atmosphere comprising oxygen during at least one of steps (a) through (f).

9. The method of claim 8 wherein the mixture comprises 20 to 40 mass % water and
wherein the green aggregate is a green pellet and the aggregate is a pellet.

10. The method of claim 8 or claim 9 wherein the green aggregate is exposed to the atmosphere comprising oxygen during all of steps (a) through (f).

11. The method of any one of claims 8 to 10 wherein the mixture further comprises 0.1 to 10 mass % of at least one metal selected from Ni, Pt, Rh, and Pd.

12. The aggregate of any one of claims 1 to 7 made by the method of any one of claims 8 to 11.

13. An apparatus for producing a $CO_2$-depleted gas from a $CO_2$-containing gas, the apparatus comprising:

a bed containing a plurality of $CO_2$-sorptive aggregates, wherein the plurality of $CO_2$-sorptive aggregates comprise an aggregate as claimed in any one of Claims 1 to 7 or Claim 12.

14. A process for producing a $CO_2$-depleted gas from a $CO_2$-containing gas in an apparatus as claimed in Claim 13, the process comprising:

(i) passing the $CO_2$-containing gas through the bed under conditions sufficient to sorb $CO_2$ and form calcium carbonate and/or magnesium carbonate with the plurality of aggregates and thereby forming the $CO_2$-depleted gas;
(ii) regenerating the bed by passing a purge gas through the bed under conditions sufficient to liberate $CO_2$ from the plurality of aggregates and withdrawing a by-product gas comprising $CO_2$ from the apparatus; and
(iii) repeating (i) and (ii) in a cyclic manner.

15. The process of claim 14 wherein the conditions sufficient to sorb $CO_2$ and form calcium carbonate and/or magnesium carbonate include a temperature ranging from 600°C to 800°C and a pressure ranging from 1 to 100 bar (1 to 100 atmospheres), and wherein the conditions sufficient to liberate $CO_2$ include a temperature ranging 650°C to 900°C and a pressure ranging from 0.9 to 100 bar (0.9 to 100 atmospheres), and wherein the purge gas comprises at least one of nitrogen and steam and the purge gas optionally comprises oxygen.

16. A reactor for producing a hydrogen-containing gas, the reactor comprising:

a bed containing $CO_2$-sorptive aggregates, optionally containing steam-hydrocarbon reforming catalyst aggregates comprising a reforming catalyst, and optionally containing a metal oxide of at least one of Cu, Fe and Ni, wherein the $CO_2$-sorptive aggregates are the aggregates as claimed in any one of Claims 1 to 7 or Claim 12, and wherein if the bed does not contain the steam-hydrocarbon reforming catalyst aggregates and does not contain the metal oxides, then at least a plurality of the $CO_2$-sorptive aggregates include the at least one metal selected from Ni, Pt, Rh and Pd.

17. A process for producing a hydrogen-containing gas in a reactor as claimed in Claim 16, the process comprising:

(i) in a production step, introducing steam and a feed gas containing methane into the reactor, reacting the methane and the steam in the bed in the presence of at least one of the reforming catalyst, the metal oxide and the at least one metal under reaction conditions sufficient to form hydrogen, sorb $CO_2$ and form calcium carbonate and/or magnesium carbonate, and withdrawing a product gas comprising hydrogen from the reactor;
(ii) in a regeneration step, regenerating the $CO_2$-sorptive aggregates by passing a purge gas through the bed under conditions sufficient to liberate $CO_2$ from the $CO_2$-sorptive aggregates and withdrawing a by-product gas comprising $CO_2$ from the reactor; and
(iii) repeating (i) and (ii) in a cyclic manner.

18. The process of claim 17 wherein the reaction conditions sufficient to form hydrogen, sorb $CO_2$ and form calcium carbonate and/or magnesium carbonate include a temperature ranging from 350°C to 800°C and a pressure ranging from 1 to 100 bar (1 to 100 atmospheres), and wherein the conditions sufficient to liberate $CO_2$ include a temperature ranging 450°C to 900°C and a pressure ranging from 0.9 to 100 bar (0.9 to 100 atmospheres), and wherein the purge gas comprises at least one of nitrogen and steam and the purge gas optionally comprises oxygen.

FIG. 1

EP 2 216 094 A2

FIG. 2

EP 2 216 094 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20050112056 A

- US 7267811 B

### Non-patent literature cited in the description

- **J.C. Abanades.** The maximum capture efficiency of CO2 using carbonation/calcination cycle of CaO/Ca-CO. *Chemical Engineering Journal,* 2002, vol. 90, 303-306
- Synthesis, Experimental Studies, and Analysis of a New Calcium-Based Carbon Dioxide Absorbent. *Energy and Fuels,* 2005, vol. 19, 1447-1452
- Effect of Preparation Temperature on Cyclic CO2 Capture and Multiple Carbonation - calcination Cycles for a New Ca-Based CO2 Sorbent. *Ind. Eng. Chem. Res.,* 2006, vol. 45, 1911-1917
- Parametric Study of the CaO-Ca12Al14O33 Synthesis with Respect to High CO2 Sorption Capacity and Stability on Multicycle Operation. *Ind. Eng. Chem. Res.,* 2008, vol. 47, 9537-9543

- Development of new CaO based sorbent materials for CO2 removal at high temperature. *Microporous and Mesoporous Materials,* 2008, vol. 110, 119-127
- **Yi ; Harrison.** Low-Pressure Sorption-Enhanced Hydrogen Production. *Ind. Eng. Chem. Res.,* 2005, vol. 44, 1665-1669
- **Wu, Beum, Yang ; Kim.** Properties of Ca-Based CO2 Sorbent Using Ca(OH)2 as Precursor. *Ind. Eng. Chem. Res.,* 2007, vol. 46, 7896-7899
- **Satrio ; Shanks ; Wheelock.** Development of a Novel Combined Catalyst and Sorbent for Hydrocarbon Reforming. *Ind. Eng. Chem. Res.,* 2005, vol. 44, 3901-3911